# EUROPEAN PATENT SPECIFICATION

(11) **EP 3 577 496 B1**
(45) Date of publication and mention of the grant of the patent: **04.09.2024**
(21) Application number: 18705800.3
(22) Date of filing: 05.02.2018
(51) Int. Cl.: G01V 1/38

(54) **METHODS AND SYSTEMS FOR DEPLOYMENT OF SEISMIC AUTONOMOUS UNDERWATER VEHICLES**
VERFAHREN UND SYSTEME ZUR ENTFALTUNG SEISMISCHER AUTONOMER UNTERWASSERFAHRZEUGE
PROCÉDÉS ET SYSTÈMES DE DÉPLOIEMENT DE VÉHICULES SOUS-MARINS AUTONOMES SISMIQUES

(30) Priority: 06.02.2017 US 201762455417 P
(43) Date of publication of application: 11.12.2019
(73) Proprietor: PXGEO UK Limited, Bristol BS1 6FL (GB); Postic, Erwan Francois Marie, Houston, TX 77042 (US)
(72) Inventor: POSTIC, Erwan Francois Marie, Houston Texas 77042 (US); BRIZARD, Thierry, 91340 Ollainville (FR)
(74) Representative: HGF
(86) International application number: PCT/US2018/016878
(87) International publication number: WO 2018/145011

(56) References cited:
- JP-A- H08 248 114
- US-A- 5 894 450
- US-A1- 2015 336 645
- US-A1- 2016 124 105

## Description

### BACKGROUND OF THE INVENTION

### PRIORITY

This application claims priority to U.S. provisional patent application no. 62/455,417, filed on February 6, 2017.

### FIELD OF THE INVENTION

This invention relates to marine seismology and more particularly relates to the deployment of ocean bot o seismic autonomous underwater vehicles (AUVs).

### DESCRIPTION OF THE RELATED ART

Marine seismic data acquisition and processing generates a profile (image) of a geophysical structure under the seafloor. Reflection seismology is a method of geophysical exploration to determine the properties of the Earth's subsurface, which is especially helpful in determining an accurate location of oil and gas reservoirs or any targeted features. Marine reflection seismology is based on using a controlled source of energy (typically acoustic energy) that sends the energy though a body of water and subsurface geologic formations. The transmitted acoustic energy propagates downwardly through the subsurface as acoustic waves, also referred to as seismic waves or signals. By measuring the time it takes for the reflections or refractions to come back to seismic receivers (also known as seismic data recorders or nodes), it is possible to evaluate the depth of features causing such reflections. These features may be associated with subterranean hydrocarbon deposits or other geological structures of interest.

There are many methods to record the reflections from a seismic wave off the geological structures present in the surface beneath the seafloor. In one method, a marine vessel tows an array of seismic data recorders provided in streamers. In another method, seismic data recorders are placed directly on the ocean bottom by a variety of mechanisms, including by the use of one or more of Autonomous Underwater Vehicles (AUVs), Remotely Operated Vehicles (ROVs), by dropping or diving from a surface or subsurface vessel, or by attaching autonomous seismic nodes to a cable that is deployed behind a marine vessel. The data recorders may be discrete, autonomous units, with no direct connection to other nodes or to the marine vessel, where data is stored and recorded.

Emerging technologies in marine seismic surveys need a fast and cost-effective system for deploying and recovering seismic receivers that are configured to operate underwater, and in particular ocean bottom seismic nodes. Newer technologies use AUVs that have a propulsion system and are programmed to move to desired positions and record seismic data. In general, the basic structure and operation of a seismic AUV is well known to those of ordinary skill. For example, Applicant's U.S. Patent No. 9,090,319, discloses one type of autonomous underwater vehicle for marine seismic surveys. Applicant's U.S. Patent Publication No. 2017/0137098, discloses another type of seismic AUV. Further, it is also generally known how to guide AUVs to the bottom of the ocean to land at predetermined positions, such as that disclosed in Applicant's U.S. Patent Nos. 9,845,137 and 9,873,496. US 2015/336645 discloses an autonomous underwater vehicle (AUV) for recording seismic signals during a marine seismic survey. The AUV includes a body having a flush shape; a buoyancy system located inside the body and configured to control a buoyancy of the AUV while traveling underwater; a processor connected to the buoyancy system and configured to select one of plural phases for the buoyancy system at different times of the seismic survey.

US5894450 discloses an oceanographic sampling system including two or more underwater vehicles disposed in an array and an array controller for controlling the array of underwater vehicles as data is acquired. Each underwater vehicle includes a propulsion system for moving the underwater vehicle independently of the other underwater vehicles, a sensor for sensing an ocean parameter and providing sensor data representative of the ocean parameter as the underwater vehicle moves, a navigation subsystem for determining position data representative of the position of the underwater vehicle as the sensor data is acquired and a synchronizing subsystem for time synchronizing the sensor data and the position data acquired by the underwater vehicle with sensor data and position data acquired by other underwater vehicles. The array of underwater vehicles may function as a large aperture phased array, and phased array analysis techniques may be applied to the time-synchronized sensor data and position data. US 2016/124105 discloses apparatuses, systems, and methods for guiding and/or positioning a plurality of seismic nodes on or near the seabed by an autonomous underwater vehicle (AUV) or a remotely operated vehicle (ROV). JP H08248114 describes a method for measuring the location of an underwater body. Buoys 1 and 2 floating on the water surface transmit acoustic signals including information on its own absolute location as a beacon wave. An underwater body measures the relative location between the buoys and oneself according to the coming direction of the beacon wave transmitting from the buoys. Further, the body extracts the information on the buoy's absolute location including in the beacon wave. The body computes its own absolute location based on both the information on buoy's absolute location and the information on the relative location between the buoy and oneself.

Because a seismic survey may require hundreds if not thousands of AUVs for a particular survey, an AUV is needed that is easy to operate and relatively straightforward and cost-effective to manufacture. However, existing technologies for deploying a seismic AUV to the ocean bottom are not cost effective and present many operational problems. A need exists for an improved seismic AUV deployment method that is more cost effective and less complex, more reliable, and able to deploy thousands of seismic AUVs in an efficient manner.

### SUMMARY OF THE INVENTION

The invention provides a method for performing a marine seismic survey in a body of water and a system configured to perform a marine seismic survey on the seabed as set out in the independent claims.

Some optional features are set out in the dependent claims. Systems and methods are disclosed for deploying seismic autonomous underwater vehicles (AUVs) to the seabed by using a variety of guidance systems and/or positioning/communication protocols based on a particular AUV's location. A combination of a USBL system and a phased array system may be used to deploy different groups of AUVs on one or more deployment lines of a seismic survey area. The deployment lines may be generally perpendicular or parallel to a deployment vessel' s direction of travel. Once a certain number of AUVs have landed on the seabed, the landed AUVs may be used to guide flying AUVs to their intended seabed destination by using acoustic pingers and phased array techniques. Time intervals for acoustic signals emitted from landed AUVs may be generated using a predetermined Time of Emission pattern and received by a phased array receiver on flying AUVs.

The method may further comprise emitting acoustic pulses at a first frequency from a first plurality of landed seismic AUVs on a first deployment line and emitting acoustic pulses at a second frequency from a second plurality of landed seismic AUVs on a second deployment line. The method may further comprise guiding a flying AUV across one or more deployment lines and upon crossing an intended destination deployment line guiding the flying AUV substantially in-line with the intended destination deployment line until reaching a target seabed position on the intended destination deployment line.

The system may comprise a first deployment line on the seabed comprising a first plurality of seismic AUVs and a second plurality of seismic AUVs. The first plurality of AUVs may be configured to be guided to the seabed using USBL.

The AUVs of each deployment line may be configured to emit acoustic pulses at a particular frequency after landing. A time interval of the emitted pulses may be determined by a Time of Emission (TOE) pattern, wherein each AUV after landing is configured to emit an acoustic pulse at a different time slot. The TOE pattern may repeat itself a plurality of times across a plurality of different AUV groups for each of the first and second deployment lines. The TOE pattern may create at least a predetermined minimum separation between the emitted pulses received by an approaching seismic AUV.

The system may further comprise a second deployment line on the seabed comprising a third plurality of seismic AUVs and a fourth plurality of seismic AUVs, wherein each AUV of the third plurality of seismic AUVs is configured to be guided to the seabed using USBL, wherein each AUV of the fourth plurality of seismic AUVs is configured to be guided to the seabed using phased array, wherein each of the AUVs of the first deployment line is configured to emit acoustic pulses at a first frequency after landing and each of the AUVs of the second deployment line is configured to emit acoustic pulses at a second frequency after landing.

### BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.
FIG. 1 illustrates a schematic diagram of an AUV suitable for use according to embodiments.
FIG. 2 illustrates a side schematic view of a deployment system which may be used to deploy AUVs in accordance with an embodiment.
FIG. 3 illustrates a top schematic view of a deployment system to deploy seismic AUVs to the seabed according to one embodiment of the present disclosure.
FIGs. 4A-4D illustrate a top schematic view of a deployment system to deploy seismic AUVs to the seabed according to another embodiment of the present disclosure.
FIGs. 5A-5F illustrate a top schematic view of various operational aspects of a guidance system.
FIG. 6 illustrates a top schematic view of various operational aspects of a guidance system.
FIGs. 7A-7B illustrate one embodiment of a Time of Emission (TOE) pattern.

### DETAILED DESCRIPTION

Various features and advantageous details are explained more fully with reference to the nonlimiting embodiments that are illustrated in the accompanying drawings and detailed in the following description. Descriptions of well-known starting materials, processing techniques, components, and equipment are omitted so as not to unnecessarily obscure the invention in detail. It should be understood, however, that the detailed description and the specific examples, while indicating embodiments of the invention, are given by way of illustration only, and not by way of limitation. The scope of the invention should be determined with reference to the appended claims.

### AUTONOMOUS UNDERWATER VEHICLES AND COMPONENTS THEREOF

An autonomous underwater vehicle (AUV) may be used to record seismic signals on or near the seabed. A seismic AUV in the following description is considered to encompass an autonomous self-propelled underwater node that has one or more sensors capable of detecting seismic waves in a marine environment. In general, the structure and operation of a seismic AUV is well known to those of ordinary skill. For example, Applicant's U.S. Patent No. 9,090,319, discloses one type of autonomous underwater vehicle for marine seismic surveys.

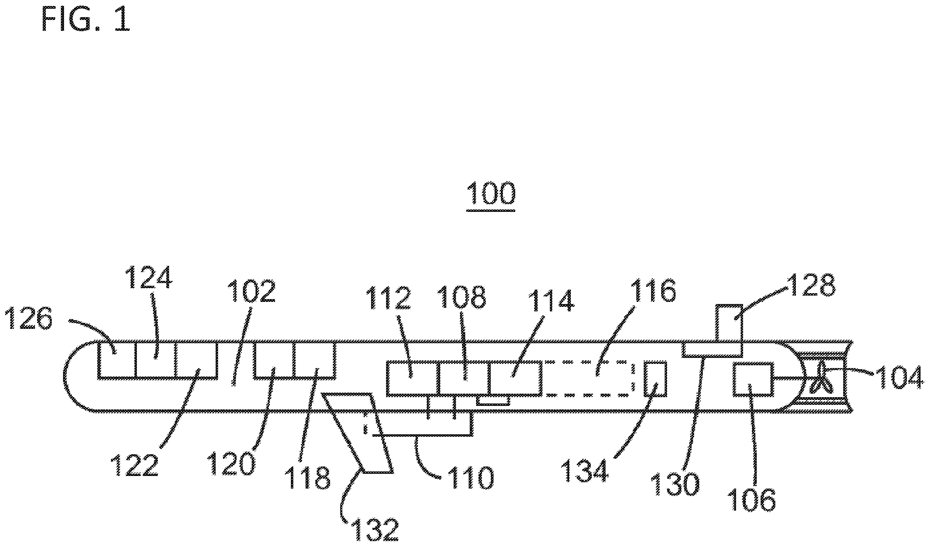

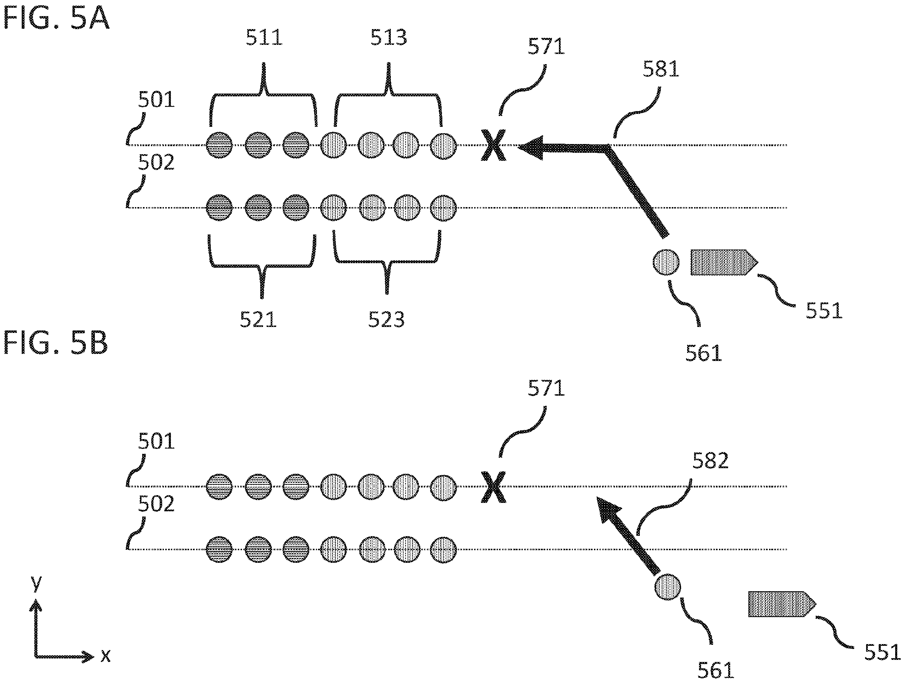

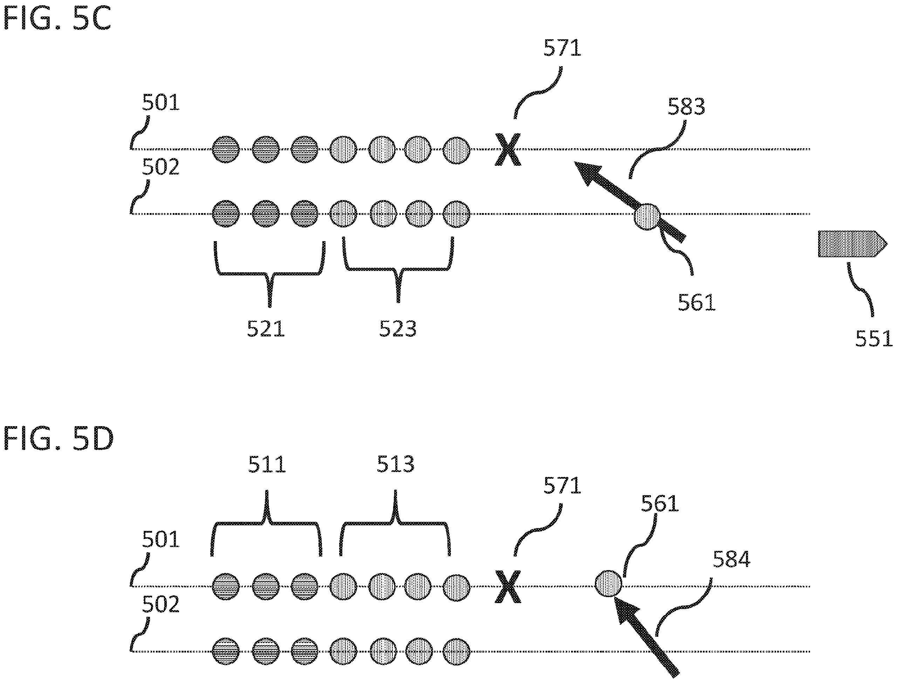

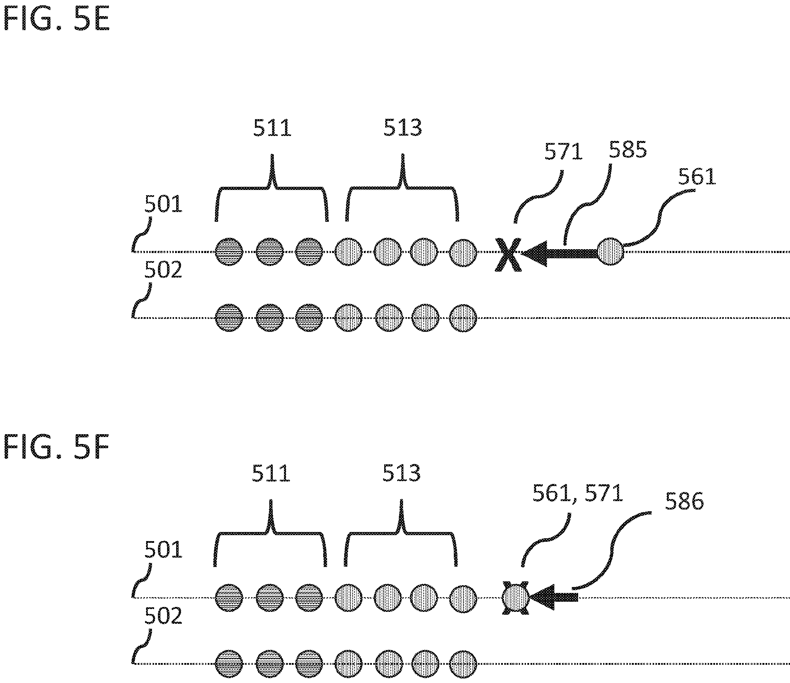

FIG. 1 is reproduced from FIG. 5 of Applicant's U.S. Patent No. 9,090,319. The disclosed embodiment may use one or more systems, components, and/or features from the AUV described in FIG. 1. FIG. 1 illustrates AUV 100 having a body 102 in which a propulsion system may be located. The propulsion system may include one or more propellers 104 and a motor 106 for activating the propeller 104. Other propulsion systems may be used, such as jets, thrusters, pumps, etc. Further, the propellers (or other propulsion systems) may be located at various parts of the AUV, such as front, sides, or the top or bottom of the AUV, such as that disclosed in U.S . Patent Publication No. 2017/0137098. Alternatively, the propulsion system may include adjustable wings 132 for controlling a trajectory of the AUV. Motor 106 may be controlled by a processor/controller 108. Processor 108 may also be connected to one or more seismic sensors 110. Seismic sensor 110 may have a shape such that when the AUV lands on the seabed, the seismic sensor achieves a good coupling with the seabed sediment. The seismic sensor may include one or more of a hydrophone, geophone, accelerometer, etc. For example, if a 4C (four component) survey is desired, the seismic sensors may include three accelerometers and a hydrophone, i.e., a total of four sensors. Alternatively, the seismic sensor may include three geophones and a hydrophone. Of course, other sensor combinations are possible, and may include one or more of a hydrophone, geophone, accelerometer, electromagnetic sensor, depth sensor, MEMs, or a combination thereof. Seismic sensor 110 may be located completely or partially inside body 102. A memory unit 112 may be connected to processor 108 and/or seismic sensor 110 for storing seismic data recorded by seismic sensor 110. Power system 114 (such as one or more batteries) may be used to power all these components. Battery 114 may be allowed to shift its position along a track 116 to change the AUV's center of gravity. This shift may be controlled by processor 108. The AUV may also include a clock and digital data recorder (not shown).

In one embodiment, the AUV may also include an inertial navigation system (INS) 118 configured to guide the AUV within a body of water and to a desired location. An inertial navigation system may include a module containing accelerometers, gyroscopes, magnetometers, or other motion-sensing devices. The INS may initially be provided with the current position and velocity of the AUV from another source, for example, a human operator, a GPS satellite receiver, a deployed subsea station, a deployed ROV, another AUV, from one or more surface vessels, etc., and thereafter, the INS computes its own updated position and velocity by integrating (and optionally filtrating) information received from its motion sensors. One advantage of an INS is that it requires no external references in order to determine its position, orientation or velocity once it has been initialized. However, the E S may still require regular or periodic updates from an external reference to update the AUV's position to decrease the positioning error of the AUV, particularly after long periods of time subsea. As noted above, alternative systems may be used, as, for example, acoustic positioning. An optional acoustic Doppler Velocity Log (DVL) (not shown) can also be employed as part of the AUV, which provides bottom-tracking capabilities for the AUV. Sound waves bouncing off the seabed can be used to determine the velocity vector of the AUV, and combined with a position fix, compass heading, and data from various sensors on the AUV, the position of the AUV can be determined. This assists in the navigation of the AUV, provides confirmation of its position relative to the seabed, and increases the accuracy of the AUV position in the body of water. In other embodiments, and to reduce the complexity of the AUV, an INS may not be utilized.

Besides or instead of INS 118, the AUV may include compass 120 and other sensors 122 as, for example, an altimeter for measuring its altitude, a pressure gauge, an interrogator module, etc. The AUV 100 may optionally include an obstacle avoidance system 124 and a communication device 126 (e.g. , Wi-Fi or other wireless interface, such as a device that uses an acoustic link) or other data transfer device capable of wirelessly transferring seismic data and/or control status data. One or more of these elements may be linked to processor 108. The AUV further includes antenna 128 (which may be flush with or protrude from the AUV s body) and corresponding acoustic system 130 for subsea communications, such as communicating with a deployed ROV (or other underwater station), another AUV, or a surface vessel or station. For surface communications (e.g. , while the AUV is on a ship), one or more of antenna 128 and communication device 126 may be used to transfer data to and from the AUV. Stabilizing fins and/or wings 132 for guiding the AUV to the desired position may be used with propulsion system for steering the AUV. However, in one embodiment, the AUV has no fins or wings. The AUV may include buoyancy system 134 for controlling the AUV's depth and keeping the AUV steady after landing.

Acoustic system 130 may be an Ultra-Short Baseline (USBL) system, also sometimes known as Super Short Base Line (SSBL). This system uses a method of underwater acoustic positioning. A complete USBL system may include a transceiver or acoustic positioning system mounted on a pole under a vessel or ROV (such as Hi-PAP or µPAP, commercially available by Kongsberg) and a transponder on the AUV. In general, a hydro-acoustic positioning system consists of both a transmitter and a receiver, and any Hi-PAP or µPAP or transponder system acts as both a transmitter and a receiver. An acoustic positioning system uses any combination of communications principles for measurements and calculations, such as SSBL. In one embodiment, the acoustic positioning system transceiver comprises a spherical transducer with hundreds of individual transducer elements. A signal (pulse) is sent from the transducer (such as a Hi-PAP or µPAP head on the surface vessel), and is aimed towards the seabed transponder located on the AUV. This pulse activates the transponder on the AUV, which responds to the vessel transducer after a short time delay. The transducer detects this return pulse and, with corresponding electronics, calculates an accurate position of the transponder (AUV) relative to the vessel based on the ranges and bearing measured by the transceiver. In one embodiment, to calculate a subsea position, the USBL system measures the horizontal and vertical angles together with the range to the transponder (located in the AUV) to calculate a 3D position projection of the AUV relative to a separate station, basket, ROV, or vessel. An error in the angle measurement causes the position error to be a function of the range to the transponder, so an USBL system has an accuracy error increasing with the range. Alternatively, a Short Base Line (SBL) system, an inverted short baseline (iSBL) system, or an inverted USBL (iUSBL) system may be used, the technology of which is known in the art. For example, in an iUSBL system, the transceiver is mounted on or inside the AUV while the transponder/responder is mounted on a separate vessel/station and the AUV has knowledge of its individual position rather than relying on such position from a surface vessel (as is the case in a typical USBL system). In another embodiment, a long baseline (LBL) acoustic positioning system may be used. In a LBL system, reference beacons or transponders are mounted on the seabed around a perimeter of a work site as reference points for navigation. The LBL system may use an USBL system to obtain precise locations of these seabed reference points. Thus, in one embodiment, the reference beacon may comprise both an USBL transponder and a LBL transceiver. The LBL system results in very high positioning accuracy and position stability that is independent of water depth, and each AUV can have its position further determined by the LBL system. The acoustic positioning system may also use an acoustic protocol that utilizes wideband Direct Sequence Spread Spectrum (DSSS) signals. The AUV may be equipped with a plurality of communication devices, such as an USBL beacon capable of receiving and transmitting acoustic signals, and a phased array receiver (or system) that is able to determine the direction of an incoming acoustic signal by analysis of the signal phase. The AUV may also be equipped with an acoustic modem.

With regard to the AUV's internal configuration, the AUV includes a CPU that may be connected to an inertial navigation system (INS) (or compass or altitude sensor and acoustic transmitter for receiving acoustic guidance from the mother vessel), a wireless interface, a pressure gauge, and an acoustic transponder. The INS is advantageous when the AUV's trajectory has been changed, for example, because of an encounter with an unexpected object (e.g., fish, debris, etc.), because the INS is capable of taking the AUV to the desired final position as it encounters currents, wave motion, etc. Also, the INS may have high precision. For example, an INS may be accurate up to 0 .1% of the travelled distance, and a USBL system may be accurate up to 0.06% of the slant range. Thus, it is expected that for a target having a depth of 1000 m, the INS and/or the acoustic guidance is capable of steering the AUV within +/- 1 m of the desired target location. The INS may be also configured to receive data from a surface vessel and/or a deployed ROV to increase its accuracy. The AUV may include multiple CPUs. For example, a second CPU may be configured to control one or more attitude actuators and a propulsion system. One or more batteries may be located in the AUV. A seismic payload is located inside the AUV for recording the seismic signals. As another embodiment, an obstacle avoidance system may be included in the AUV, which is generally configured to detect an object in the path of the AUV and divert the AUV from its original route to avoid contact with the object. In one example, the obstacle avoidance system includes a forward looking sonar. The AUV includes any necessary control circuitry and software for associated components. In one embodiment, the AUV may have various operational modes, such as wakeup, sleep, maintenance, and travel modes.

Those skilled in the art would appreciate that more or less modules may be added to or removed from the AUV. For example, the AUV may include variable buoyancy functionality, such as the ability to release a degradable weight on the bottom of the ocean after seismic recording to assist in the rise or surfacing of the AUV to a recovery spot (such as on or near the ocean surface). In other embodiments, the AUV may include one or more buoyancy or ballast tanks that may be flooded with air or water to assist in the vertical navigation of the AUV, such as described in more detail in Applicant's U.S. Patent Publication No. 2015/0336645. In another embodiment, the AUV may include a suction skirt that allows water to be pumped out of a compartment under the AUV after it has landed to create a suction effect towards the seabed. In still other embodiments, the AUV may include one or more seabed coupling mechanisms or self-burying functionality, such as the ability to rock or twist into the ocean by specific movements of the AUV or the use of a plurality of water outlets on the bottom of the AUV to fluidize the seabed sediment, as described in more detail in Applicant's U.S. Patent Nos. 9,381,986 and 9,457,879.

In one embodiment, minimal acoustic devices may be required on the AUV, which decreases the overall cost of the AUV and guidance/deployment protocols during deployment and retrieval of the AUVs to and from the seabed. For example, for acoustic communications each AUV may only comprise a USBL beacon and a phased array system, such as but not limited to a Sonardyne beacon and an Arkeocean phase array system. In one embodiment, the phase array system may comprise a Combined Acoustic Phased Array (CAPA) and a Triton processing board. The phased array is configured to intercept and/or receive the acoustic signals emitted by other seismic AUVs (such as previously landed seismic AUVs) and to guide the AUV to the seabed based on those received acoustic signals.

### AUV DEPLOYMENT AND GUIDANCE SYSTEMS

The disclosed AUV deployment and guidance system provides numerous benefits over previously disclosed deployment systems and methods for out bound guidance of seismic AUVs from a deployment vessel to the seabed, including having AUVs that are less complex and more reliable, deploying a high number of AUVs within a relatively short time period, and more precise coordination for better seabed positioning of the AUVs. The disclosed system may be utilized whether the AUVs are deployed directly from a surface vessel or from a subsea station (such as a lowered basket). Further, one or more surface vessels may be utilized to deploy the AUVs and to communicate with the AUVs. Still further, the particular retrieval method of the AUVs is not limited, and a wide variety of retrieval options and inbound guidance protocols may be used to recover some or all of the AUVs.

The disclosed system and method may use a variety of guidance systems and/or communication protocols based on the particular AUVs location and deployment time, both relative to the surface vessel and the other AUVs. In embodiments, the system uses a combination of a USBL system and an acoustic pinger system detected by a phase array system of each AUV. The disclosed guidance system uses a first positioning/communications system (such as USBL) to deploy a first plurality of AUVs to the seabed, and then uses a second positioning/communications system comprising phased array detectors at each AUV detecting acoustic signals emitted by the first plurality of AUVs, (e.g. from acoustic pingers) to deploy a second plurality of AUVs to the seabed. Each of these positioning/communications systems, by themselves, is known in the art. However, the particular use of these different systems as described herein is novel and offers a much more efficient and effective AUV deployment model than currently available. The disclosed outbound guidance system is not particularly dependent on the particular seismic AUV utilized, as long as the AUV is able to communicate with the different types of USBL and acoustic pingers and comprises the phased array receiver utilized in the disclosed guidance system.

In embodiments, a USBL system is used to actively guide a first plurality of AUVs to the seabed, such as AUVs deployed to the seabed before any other AUVs are deployed to the seabed. The USBL system may be configured to measure the position of the AUV in flight to monitor each of the AUV trajectories. Some or all of the deployed AUVs are configured to act as sea bottom acoustic pingers, e.g., they are configured to emit an acoustic pulse at a given frequency and at a given time. Once a certain number of AUVs of a given deployment line have landed, their coordinates are measured by the USBL system and potentially given to a second plurality of AUVs, and the coordinates of the first plurality of AUVs may then be used to guide the second plurality of AUVs to their intended seabed destination. A final guidance phase is performed using a phased array system located on each AUV. Once a certain number of AUVs of a given deployment line has landed, each AUV may begin emitting pulses at its assigned frequency in its assigned time slot to therefore act as an additional pinger for guiding additional AUVs on the given deployment line. The pinger may be part of the phased array system. A LBL system may not be used, and a first plurality of AUVs are deployed to the seabed using a USBL system and a second plurality of AUVs are deployed to the seabed using a phased array system based on acoustic signals received from the previously landed AUVs.

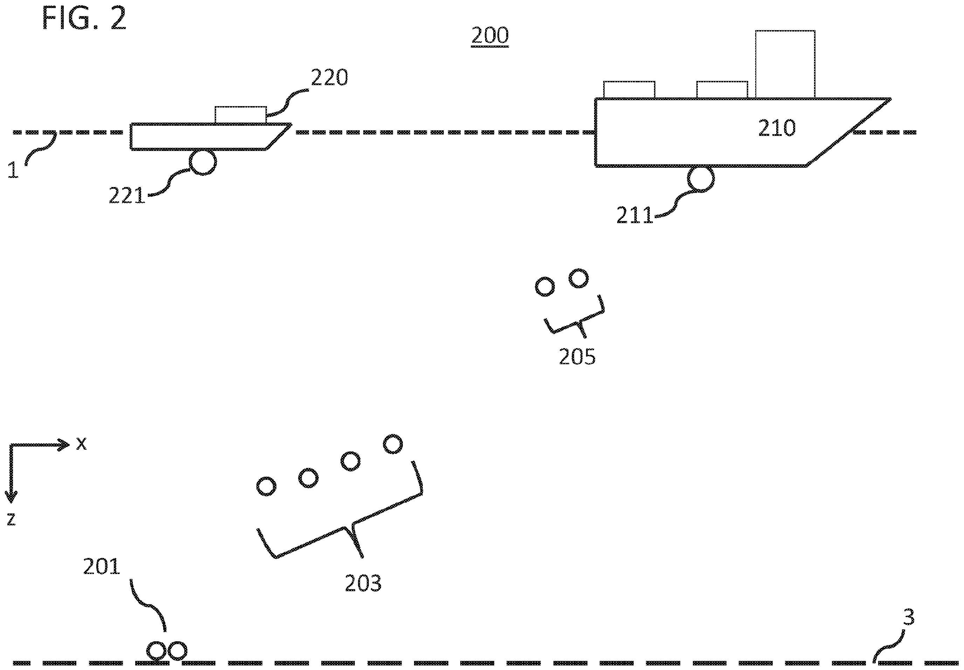

FIG. 2 illustrates an AUV deployment system 200 from a side view through a body of water. Deployment system 200 uses a plurality of surface vessels located on surface 1, such as first surface vessel 210 configured to store and deploy a plurality of AUVs into a body of water (e.g. , a deployment vessel) and second surface vessel 220 configured to communicate with some or all of the deployed AUVs, which may be an unmanned surface vessel ("USV") or a floating buoy with a communications system. Each AUV is configured to land on seabed 3. Each of the first and second surface vessels may comprise an acoustic positioning system 211, 221, respectively, which may be a USBL system. One of the surface vessels (such as USV 220) is equipped with a USBL system. Because second surface vessel 220 may be positioned closer to the deployed AUVs than the deployment vessel 210, the second surface vessel may provide faster and better (e.g. , more accurate) positioning/communications with the AUVs. For example, towards the end of deploying the AUVs from the deployment vessel for a particular deployment line, the deployment vessel may be too far ahead along from the deployment line to accurately measure each position of the AUVs. Thus, one or more surface vessels, towed buoys, etc. configured with a USBL system may trail behind the deployment vessel so that it crosses a particular deployment line after all of the AUVs have landed and is able to better determine each AUV position on the seabed. The trailing surface vessel may travel in different patterns behind the deployment vessel to improve the accuracy of the USBL system for the landed AUV positions. The trailing vessel can travel much faster than the deployment vessel (and is thus able to travel via different patterns to be closer to the deployed AUVs) because the deployment vessel's speed is limited by the speed at which the AUVs can be deployed or ejected from the surface vessel as well as the AUV speed in water.

Only a single surface vessel may be utilized. Likewise, additional USVs or buoys may be used on the surface to better communicate with the plurality of deployed AUVs. Rather than using a second surface vessel, a second non-surface vessel may be positioned beneath the water surface, such as a remotely operated vehicle (ROV), basket, or similar subsea structure positioned subsea for deep water deployment, and equipped with a USBL system or similar acoustic system for positioning/communications with each of the deployed AUVs.

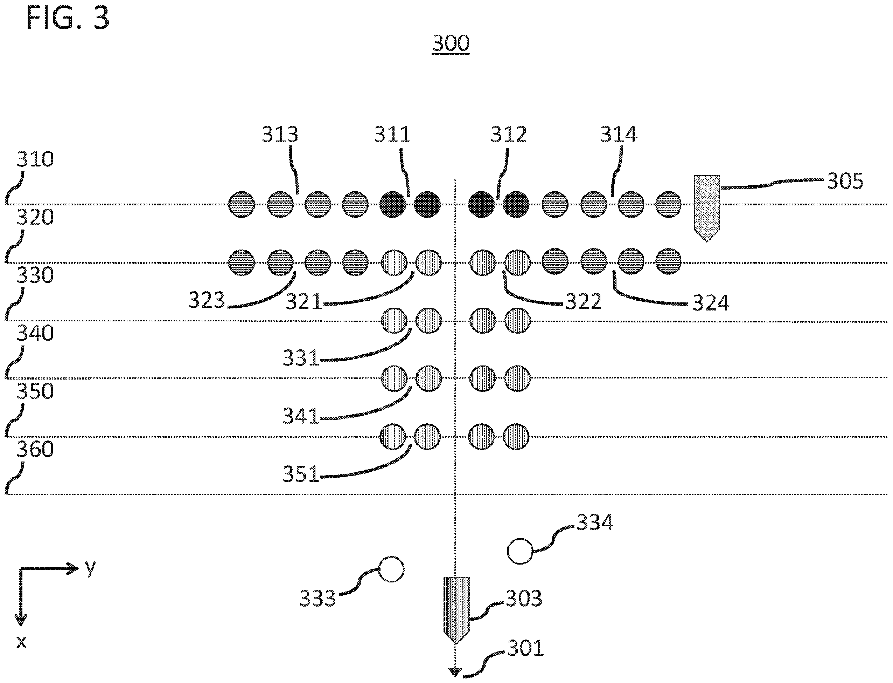

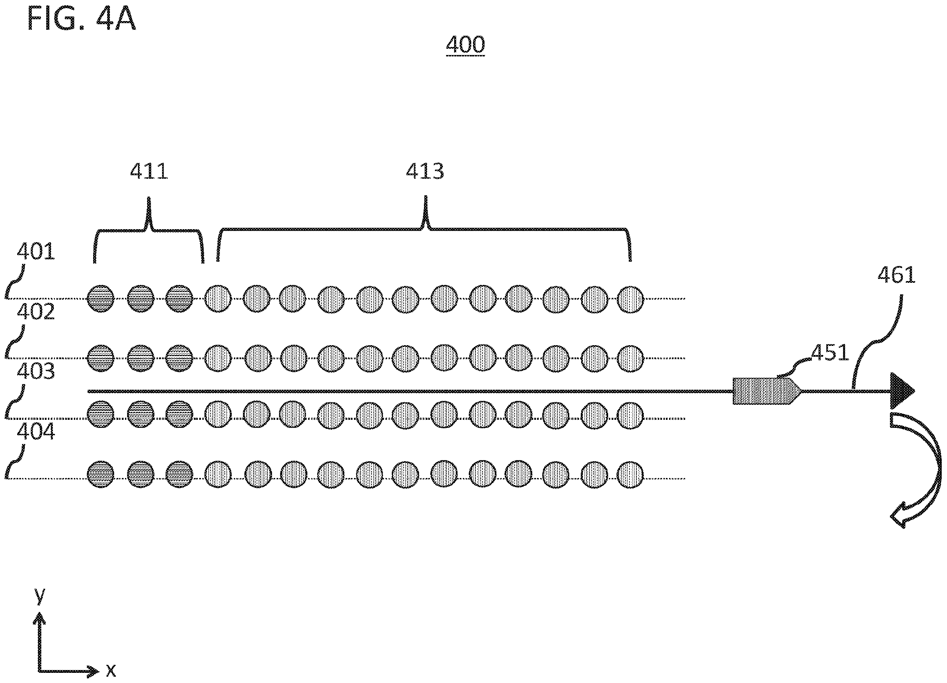

For a given seismic survey, the area to be surveyed is generally divided into a grid such that a seismic sensor node (such as a seismic AUV) may be located at a predetermined position on the seabed. In general, a deployment line is a line of predetermined seabed positions within the seismic survey area on which a plurality of seismic nodes (such as seismic AUVs) are positioned on the seabed. A wide variety of deployment line shapes and sizes are known in the art. For the present disclosure, the deployment lines may be substantially perpendicular to the direction of travel of the deployment vessel {see, e.g. , FIG. 3) or may generally be in line and/or parallel with the direction of the deployment vessel (see, e.g. , FIG. 4A-4D). Each deployment line may stretch up to 1km or more on each side of the deployment vessel and may contain tens or hundreds of AUVs. The seismic survey may contain approximately 200 AUVs, up to 1000 AUVs, or even up to 10,000 AUVs, and all 10,000 AUVs may be deployed within a relatively short period of time, such as twenty-four hours. The spacing between the deployment lines and between each AUV of the deployment line depends on the particular seismic survey and is designed prior to deployment of the AUVs.

As shown in FIG. 2, multiple groups or pluralities of AUVs (such as AUV group 201, AUV group 203, and AUV group 205) may be deployed in the water at the same time and be guided to seabed destinations based on different acoustic positioning/communications and/or guidance protocols. For example, AUV group 201 has already landed on seabed 3 and may be the first AUVs of a given deployment line. For this disclosure, the first plurality of AUVs on any given deployment line may be considered as "pivots" or "pivot AUVs," because they provide all of the positioning for subsequently deployed AUVs on a given deployment line. Pivot AUVs 201 are actively guided to their seabed destination by a USBL system, such as USBL 221. Once pivot AUVs 201 have landed, their coordinates are known by the surface vessel (such as through an USBL system). The coordinates of pivot AUVs 201 are then used as "fixed" position coordinates from which a sea bottom acoustic pinger system will emit signals intercepted and/or received by additionally deployed AUVs (such as a second plurality of AUVs 203, 205) as they are deployed from the surface vessel. The pinger system may be part of the phased array system. Pivot AUVs 201 may emit a pulse on a given frequency (such as one frequency per deployment line to avoid interferences) after seabed landing and according to a given time sequence. Any additionally deployed AUVs may detect the pulses emitted by pivot AUVs 201 (as well as by previously landed AUVs 203, 205 once they land) and then by knowing their seabed geometry and the emission time and sequence of the pulses determine the AUVs own position and guide themselves to their pre-programmed seabed landing position.

The disclosed guidance system uses a first guidance system protocol (such as USBL) to guide a first plurality of AUVs (such as pivot AUVs 201) on a first deployment line, and a second guidance system protocol (such as sea bottom acoustic pingers and phased array) to guide all of the remaining AUVs of the seismic survey and/or deployment line (such as AUVs 203, 205). For the deployment of the second plurality of seismic AUVs (which uses a one way acoustic protocol), the disclosed system is far more cost efficient, effective, and faster than traditional AUV deployment methods, such as USBL that will always suffer with the complexity of a three-way acoustic positioning/communication protocol. Further, based on the disclosed guidance system, each AUV does not require an expensive inertial navigation system (INS) or similar system, and is able to utilize relatively straightforward and known communications systems and components.

A phased array system is used for guiding some of the AUVs. Each AUV is equipped with a phased array receiver that can detect acoustic pingers or beacons. In one embodiment, the phased array system includes a pinger that enables each of the AUVs (or at least some of the AUVs) after landing to emit pulses at an assigned frequency in an assigned time slot. By using a phase array receiver on each AUV, the AUV is able measure the angles of the incoming beacon signals from the previously landed AUVs in the same deployment line. By knowing the seabed geometry of the landed AUVs, and the sequence according to which they are emitting their signals, the travelling AUVs are able to align themselves precisely with the already landed AUVs. The USBL system may be used to take control of any AUV if it is not following its pre-programmed flight path (or the phased array system is not working) and the USBL system may be used to measure each position of the AUV once it has landed on the seabed at a particular position for seismic recording.

In operation, AUVs may be deployed ahead of deployment vessel 210 so that the deployment vessel passes directly "overhead" of the AUVs after they have landed, which allows for a more precise measurement of the AUV position through the USBL system. The pivot AUVs on a predetermined number of deployment lines are all deployed first, and then the remaining AUVs of each of the deployment lines are then deployed. The pivot AUVs on each deployment line is first deployed followed by other AUVs on that deployment line prior to deploying any additional AUVs on subsequent deployment lines. The timing of the deployment of the AUVs is not as important as when (and how) the AUVs calculate their position and the guidance to their seabed destination.

As is known in the art, the AUVs may be physically deployed from the deployment vessel by any number of mechanisms, and once the AUVs have performed the seismic recording on the seabed, they may be recovered to a recovery vessel from the seabed by a variety of mechanisms. In general, the particular physical deployment and recovery method and system of the AUVs is not limited by this invention. For example, as is known in the art, the AUVs may be deployed and/or retrieved directly from a surface vessel or from a subsea station, such as an ROV or subsea basket, as described more fully in Applicant's U.S. Patent No. 9,873,496. In other words, the disclosed guidance method, system, and protocols can be utilized whether the AUVs are deployed directly from the surface vessel or from a subsea station in a body of water or from a subsea station (such as a basket) lowered from a surface vessel. Likewise, the AUVs may be recovered back to the same surface vessel that deployed the AUV, or to a dedicated recovery vessel that may be located on the surface or at a subsea position (such as an ROV or subsea basket). Further, the disclosed invention is not limited by the actual mechanism utilized by the AUVs for subsea movement. For example, during subsea movement of the AUV, one or more of the thrusters of the AUV propulsion system may be specifically operated to steer the AUV to the intended destination. In general, the use of horizontal and/or vertical thrusters for the seismic AUV during subsea travel, seabed landing, and seabed take-off are described in detail in Applicant's U.S. Patent Publication No. 2017/0137098. Again, the versatility of the disclosed seismic AUV allows it to be utilized in a wide variety of subsea deployment and retrieval operations, and the particular deployment and recovery method of the AUVs is not limited by this invention.

FIG. 3 illustrates an outbound guidance system that utilizes USBL, sea bottom acoustic pingers, and phased array techniques. As shown in FIG. 3, deployment system 300 includes a plurality of deployment lines, such as first deployment line 310, second deployment line 320, third deployment line 330, fourth deployment line 340, fifth deployment line 350, and sixth deployment line 360. In operation, the number of deployment lines may be substantially greater. Each deployment line may be substantially parallel to each other and substantially perpendicular to a direction 301 of deployment vessel 303. A second surface vessel, such as USV 305, may travel a certain distance behind deployment vessel 303, and at times may travel at various patterns or positions away from direction 301 to be closer to a particular group of deployed/landed AUVs.

Each deployment line may have or be assigned a large number of AUVs. In FIG. 3, the first AUVs on any given deployment line may be considered as "pivots" or "pivot AUVs." "Wingers" may be known as additional AUVs on a given deployment line separate from the pivot AUVs. Referring to FIG. 3, first deployment line 310 may have pivot AUVs 311, 312 and winger AUVs 313, 314. Similarly, second deployment line 320 may have pivot AUVs 321, 322 and winger AUVs 323, 324, and so forth. The pivots and wingers may be deployed on either side of the vessel. For example, pivot AUVs 311 may land on one seabed side of the deployment vessel and pivot AUVs 312 may land on the other seabed side of the deployment vessel. Similarly, winger AUVs 313 may land on one side of the surface vessel and winger AUVs 314 may land on the other side of the vessel. The number of deployment lines, as well as the number of wingers and pivots per deployment line, may vary between seismic surveys.

The pivot AUVs may be landed first in a row on a deployment line and, once their position finalized, the subsequent AUVs on a given deployment line then land at their seabed destinations based on coordinates of the first pivots. In other words, the coordinate positions of the pivot AUVs establish the coordinate positions of the winger AUVs on each deployment line. The pivot AUVs from the first deployment line (pivot AUVs 311, 312) provide guidance and/or establish the coordinate positions of the pivot AUVs (such as pivot AUVs 321, 322, etc.) in the subsequent deployment lines.

Referring to FIG. 3, the pivot AUVs of the first deployment line (e.g. , pivot AUVs 311, 312) are deployed from surface vessel 303 and actively guided by a USBL system (such as one located on surface vessel 303 or 305) to a predetermined seabed position. Once landed, the positions of pivot AUVs 311, 312 are then measured by a USBL system and used by the plurality of AUVs that they will guide, such as wingers 313, 314 on the first deployment line, pivot AUVs 321, 322 on the second deployment line, and subsequent pivots 331, 341, 351, and optionally wingers from subsequent deployment lines, such as wingers 323 , 324. As described above, based on the known coordinates of the first pivot AUVs and emitted signals, each guided AUV is able to determine is position and find its predetermined landing position by using the first pivot AUVs as effectively acoustic pingers. Thus, once the first pivot AUVs 311, 312 are guided by a first guidance system and/or protocol (such as a USBL system), all of the remaining AUVs are guided by an acoustic pinger system with phased array system.

At or near the same time of deploying the first pivot AUVs 311, 312, wingers 313 and 314 may be deployed. Alternatively, wingers 313 and 314 may not be deployed until after all of the pivot AUVs of first deployment line 310, second deployment line 320, and third deployment line 330 (or more) have been deployed and landed. As shown in FIG. 3, AUVs 333 and 334 have recently been launched from deployment vessel 303 and are travelling and/or "flying" through the water to their intended seabed destination and may be wingers on any one of the previously established deployment lines or pivots for new deployment line 360. The pivots and wingers on each deployment line are deployed at substantially the same time from the surface vessel. The pivots on each deployment line may be deployed at substantially the same time from the surface vessel following by subsequent deployment of the wingers, which may be done at substantially the same time or line by line. AUVs may be deployed on a particular deployment line on both sides of the vessel at substantially the same time. Winger AUVs of earlier deployment lines may provide guidance and/or establish the coordinate positions of additional winger AUVs on subsequent deployment lines. Thus, the pivots of a given deployment line (such as the second or third deployment line) may also act as beacons in the deployment system to guide additionally deployed pivots in subsequent deployment lines (such as the fourth or fifth deployment line). Only the pivots of a given deployment line may be used to guide the wingers of that particular deployment line.

A first guidance system protocol (such as USBL) is used to guide a first plurality of AUVs (such as pivot AUVs 311, 312) on a first deployment line, and a second guidance system protocol provided by an acoustic pinger system and phased array system is used to guide a second plurality of AUVs of the seismic survey, including any wingers of the first deployment line (e.g. , AUVs 313, 314), and potentially any pivots on subsequent deployment lines (e.g., AUVs 321, 322, 331, 341, 351), and potentially any wingers on the subsequent deployment lines (e.g. , AUVs 323, 324).

Deployment system 300 may also use a phased array guidance approach for some or all of the wingers (or even pivots) in each deployment line. In some instances, the flying AUVs may use a phased array guidance system (discussed above and below in greater detail) to detect and process the received signals from the landed AUVs (via acoustic pingers) to calculate their position. Some of the wingers of a deployment line may also act as acoustic pingers for the later deployed wingers on that deployment line. Similarly, some of the wingers from an earlier deployed deployment line (such as deployment line 310) may act as an acoustic pinger for wingers in a later deployed deployment line (such as deployment lines 320, 330).

FIGs. 4A-4D illustrates a guidance system that utilizes USBL and phased array techniques, according to some embodiments of the present invention. While similar to FIG. 3, in contrast to FIG. 3, the deployment lines are generally in line and/or parallel to the direction of travel of the deployment surface vessel. This approach simplifies the guidance and deployment system as compared to that described in relation to FIG. 3, and provides greater accuracy based on potential issues with triangulation using acoustic pingers.

As shown in FIGs. 4A-4D, deployment system 400 uses a deployment method that deploys seismic AUVs in one or more deployment lines on either side of the surface vessel that are in parallel and/or in-line with the surface vessel direction. For example, FIG. 4A shows two deployment lines on either side of the surface vessel, which include first deployment line 401, second deployment line 402, third deployment line 403, and fourth deployment line 404. Three or more deployment lines of seismic AUVs may be deployed at substantially the same time on either side of the surface vessel.

Each deployment line of deployment system 400 includes a first plurality of AUVs (such as AUV group 411) that provides the initial markers or boundaries for subsequently deployed AUVs (such as AUV group 413). First AUV group 411 may be guided to the predetermined seabed positions by a first guidance protocol provided by an USBL system and second AUV group 413 may be guided to the predetermined seabed positions by a second guidance protocol which in embodiments is a phased array system. Second AUV group 413 is guided to the seabed positions based on signals provided by first AUV group 411 as well as some of the earlier landed AUVs within second AUV group 413.

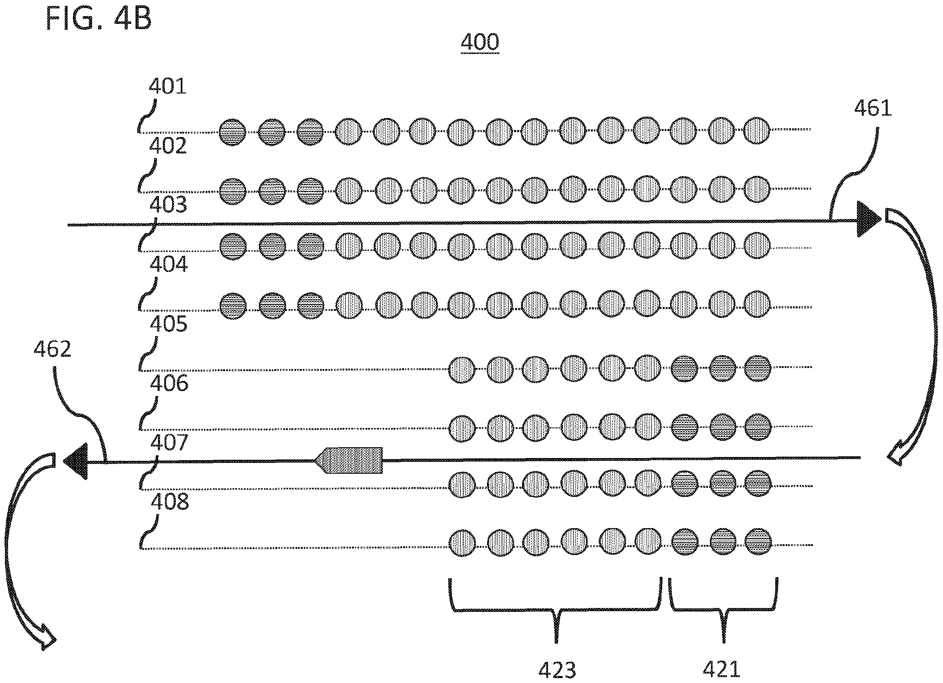

The size of the seismic survey may require multiple passes of the AUV deployment vessel by using a serpentine deployment method. For example, FIG. 4B illustrates a seismic survey with eight deployment lines, including fifth deployment line 405, sixth deployment line 406, seventh deployment line 407, and eighth deployment line 408. The surface vessel makes two substantially parallel but opposite paths through the seismic survey. First, surface vessel 451 travels in direction or path 461 and deploys seismic AUVs on two deployment lines on either side of the vessel (deployment lines 401-404). After finishing deploying the particular number of seismic nodes needed for the length of the deployment line and grid in the seismic survey, the surface vessel turns around and travels in direction/path 462 that is substantially parallel and opposite to direction/path 461. Similar to the first path, the surface vessel deploys seismic AUVs on two deployment lines on either side of the vessel (deployment lines 405-408). From a top aerial perspective (see FIG. 4B), the last deployed AUVs for deployment lines 401-401 substantially align with the first deployed AUVs of deployment lines 405-408. Similar to deployment lines 401-405, each deployment line 405-408 includes a first plurality of AUVs (such as AUV group 421) that provides the initial markers or boundaries for subsequently deployed AUVs (such as AUV group 423) of that deployment line. Like the first deployment lines illustrated in FIG. 4A, first AUV group 421 may be guided to the predetermined seabed positions by a first guidance protocol (such as an USBL system) and second AUV group 423 is guided to the predetermined seabed positions by a second guidance protocol, provided by a phased array system.

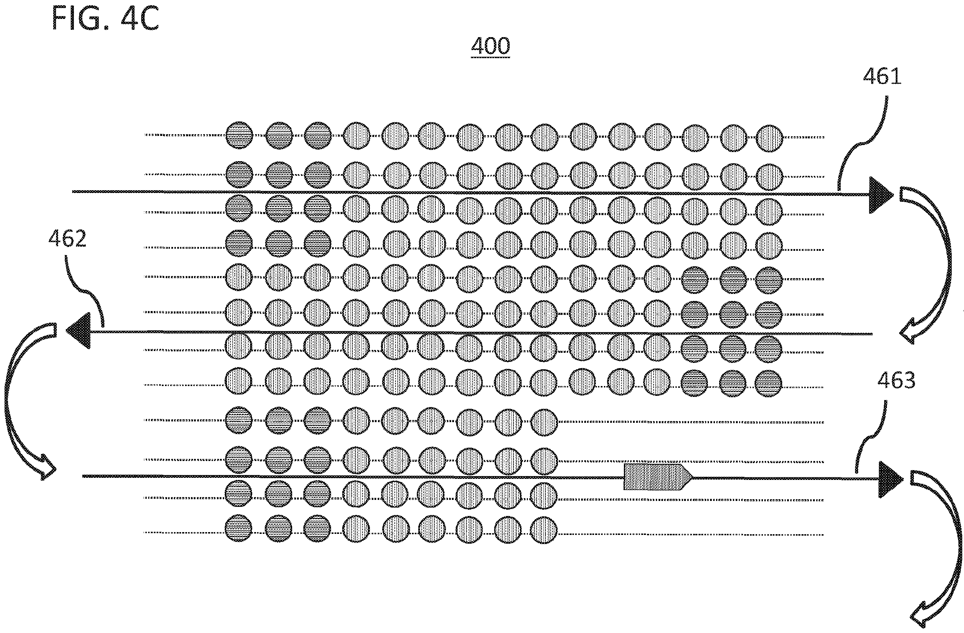

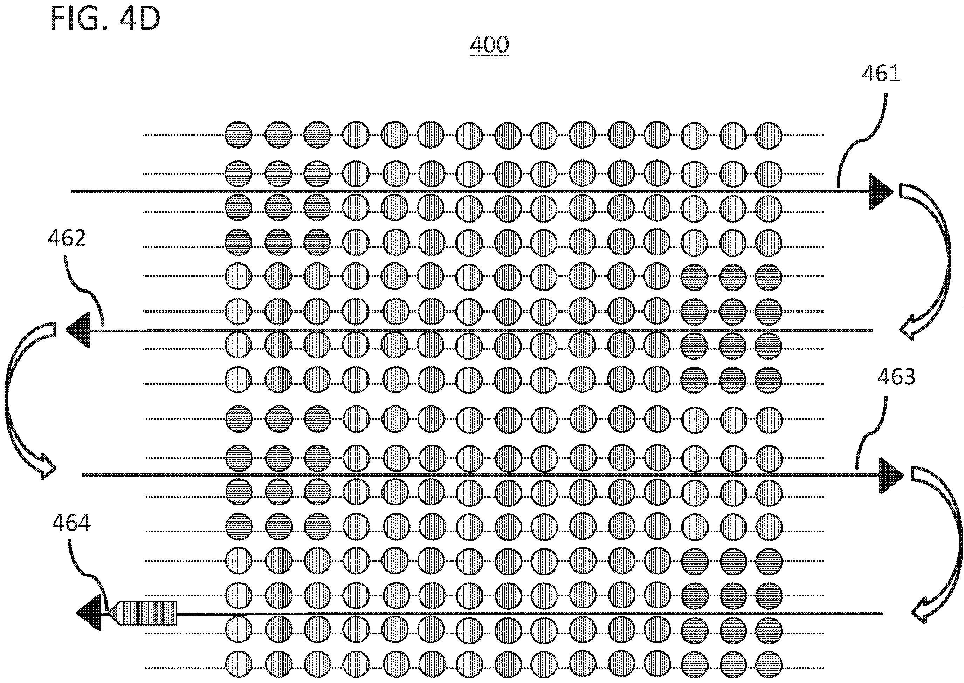

This serpentine method of the surface vessel and the laying of the deployment lines may be continued until the desired number of deployment lines have been laid for the seismic survey area until the overall desired width of the seismic survey has been reached. As illustrated in FIGs. 4C and 4D, the surface vessel makes additional passes 463 and 464 and deploys additional deployment lines (not numbered) according to the procedure detailed above. In particular, the first AUVs of each deployment line act as marker or boundary AUVs and travel to the seabed destination by a first guidance protocol (such as using positioning/communications with a USBL system), while the subsequently deployed AUVs for each deployment line use a second guidance protocol using pings with a phased array system. Depending on the size of the seismic survey, more or less deployment lines are possible (as well as the number of seismic nodes within each deployment line) and in operation, the number of deployment lines may be substantially greater. A second surface vessel (such as a USV) or a subsea vehicle may travel a certain distance behind deployment vessel 451, and at times may travel at various patterns or positions away from the deployment vessel path to be closer to a particular group of deployed/landed AUVs.

As is known in the art, the size of the seismic survey, the number of deployment lines, and the size (e.g., length) of the deployment lines may vary between different surveys. The seismic survey may comprise four to eight deployment lines (two to four deployment lines on either side of the deployment vessel) each separated by approximately 25 to 400 meters, and each deployment line may comprise approximately seismic nodes each separated by a physical distance on the seabed by 25-100 meters. Of course, these parameters may vary significantly between different seismic surveys. The width of the seismic survey (i.e., the total distance between the deployment lines) is approximately 2 km or less to take into account the acoustic range of the phased array system. Thus, if a seismic survey is greater than 2 km in width, the vessel must take multiple passes through the survey area in a generally serpentine method (as illustrated in FIGs. 4A-4D). However, as phased array systems become more complex in the future, increased ranges (and number) of the deployment lines may be possible.

As mentioned above, each deployment line may be assigned AUVs that are guided to predetermined seabed positions on the deployment line based on two different guidance protocols. Referring back to FIG. 4A, AUV group 411 comprises a first plurality of AUVs that are deployed by USBL and AUV group 413 comprises a second plurality of AUVs that are deployed by phased array. Although not marked, each subsequent deployment line of deployment system 400 likewise comprises AUVs that are deployed by either USBL or phased array. As mentioned above, the general techniques of USBL and phased array are well known. The first AUV group 411 may comprise three AUVs, which generally provides greater accuracy (and redundancy) than just one or two AUVs. The AUVs within second AUV group 413 of deployment line 401 may be deployed at substantially the same time as the first AUV group 411or after first AUV group 411 has landed.

Once the AUVs of first AUV group 411 have landed on the seabed, they start emitting acoustic emissions using pingers. Such acoustic emissions can be emitted at particular times and/or in particular patterns, as discussed in more detail below. Contrary to multiway acoustic positioning/communication devices (which are more costly and complex), pingers are typically one-way transmission devices only and are used to determine distance and bearing from the emitted location. The AUVs within second group of AUVs 413 sense the acoustic emissions from the already landed AUVs (whether from group 411 or earlier landed AUVs from group 413) and based on those emissions, the travelling AUV is configured to use a phased array system to determine the AUVs position and to correctly land at the predetermined seabed location. There is no limit on the number of AUVs that may be deployed in second AUV group 413 along the length of each deployment line, but such a number depends on the overall size and density of the survey area.

Each of the travelling AUVs within AUV group 413 may detect the acoustic emissions from one or more of the previously landed AUVs. For example, a travelling node N within AUV group 413 may receive the emissions of previously landed nodes N-1, N-2, N-3, N-4, etc. of that deployment line. If one of the prior nodes has not landed (for example seismic node N-1), travelling node N may still take its place at its planned position based on the emissions of the remaining nodes (such as seismic nodes N-2, N-3, N-4). Once travelling node N lands, it will start to emit an acoustic signal that can be used to help guide subsequent seismic AUVs, such as N+l, N+2, N+3, etc. In other words, for a given deployment line, each of the AUVs within group 413 that are guided by the phased array system may use some or all of the emissions from the previously landed AUVs to guide the position of the travelling AUV to its seabed destination. Optionally, only the previously landed AUVs of a particular deployment line provide guidance to subsequently deployed AUVs for that same deployment line. Alternatively, AUVs from a plurality of deployment lines may provide guidance to subsequently deployed AUVs across multiple deployment lines.

FIGs. 5A-5F illustrate a top schematic view of various operational aspects of deployment system 400 from FIGs. 4A-4D. Similar to deployment system 400, the illustrated guidance system of Figs. 5A-5F utilizes two deployment lines on either side of deployment vessel 551 as it travels a particular direction. However, only two deployment lines 501 and 502 on a single side of the vessel are shown for clarity. In the operational position illustrated in FIGs. 5A-5F, first deployment line 501 and second deployment line 502 each have a plurality of landed seismic AUVs. For example, first deployment line 501 comprises first AUV group 511 and second AUV group 513, and second deployment line 502 comprises first AUV group 521 and second AUV group 523. Similar to deployment system 400, each of the AUVs within first AUV groups 511, 521 is deployed using USBL, and each of the AUVs within second AUV groups 513, 523 is deployed using phased array. FIGs. 5A-5F track the approach of travelling / flying AUV 561 from surface vessel 551 to seabed target position 571. In practice, a plurality of AUVs are travelling from the surface vessel to each of their intended seabed target positions at the same time. These figures also illustrate a "dog leg" navigational approach of the AUVs where the AUVs cross various deployment lines in route to the intended destination of the AUV. For the present disclosure, a "dog leg" approach is illustrated in AUV travel path 581 (FIG. 5A), which takes a first general travel direction across one or more deployment lines (e.g., 502) prior to travelling generally in-line with the intended destination deployment line (e.g. , 501).

Referring to FIG. 5A, travelling AUV 561 has just been deployed from surface vessel 551 and its target position is target 571 on a predetermined point within deployment line 501 . One exemplary travel path 581for AUV 561travels across second deployment line 502 and then moves in-line with first deployment line 501 until AUV 561 reaches its target position 571. FIG. 5B illustrates a position where surface vessel 551 continues travel in its intended direction (e.g., substantially in-line with the deployment lines) and AUV 561 is in route to target position 571 by path 582. Path 582 takes the AUV across second deployment line 502, but the AUV has not yet crossed the second deployment line. At this point in time each of the previously landed AUVs (such as AUVs within AUV groups 511, 513, 521, and 523) are emitting acoustic signals (e.g. , pingers) that are being continually detected by travelling AUV 561 . Based on a phased array guidance system and the reception of the emitted pings, AUV 561 knows the general direction to travel towards target position 51.

FIG. 5C illustrates a position where AUV 561 is at a first "way" point when it crosses second deployment line 502 via AUV travel path 583 . According to how a phased array guidance system works (which provides both a time of arrival and bearing for each received signal), AUV 561 knows that it is crossing second deployment line 502 when all of the emitted signals align from landed AUVs 521 and 523 on second deployment line 502. For example, when the bearings from each of the emitted signals from AUVs on second deployment line 502 are substantially identical, AUV 561 is substantially in-line with the other AUVs on second deployment line 502. Also shown in FIG. 5C is surface vessel 551 after it has moved a further distance away from AUV 561. For simplicity, FIGs. 5D-5F do not show the surface vessel.

FIG. 5D illustrates a position where AUV 56is at a second "way" point when it crosses first deployment line 501 via AUV travel path 584. Again, AUV 561 knows that it is crossing first deployment line 501 when all of the emitted signals from landed AUVs 511 and 513 on first deployment line 501 align (e.g. , the bearings from the emitted signals are substantially identical). At this time, the travel path of AUV 561 substantially changes from generally travelling across one or more deployment lines to travelling in-line with a particular deployment line. For example, as illustrated in FIG. 5E, because target position 571 is on first deployment line 501, once AUV 561 travels across and/or hits deployment line 501 the AUV changes to travel path 585, which is in-line with and/or along a path of deployment line 501 towards seabed target position 571. The final guidance approach is illustrated by path 585 and involves AUV 561 listening to emitted signals from AUVs within deployment line 501 (and potentially ignoring signals from other deployment lines). FIG. 5F illustrates the position where AUV 561 has arrived and/or landed at the predetermined target position 571, which is substantially in-line with the other landed AUVs of first deployment line 501 (e.g. previously landed AUVs within AUV group 511 and AUV group 513). As shown, the AUV's final travel path 586 is substantially in-line with deployment line 501 as the AUV travels from its prior position as illustrated in FIG. 5E. The landing approach of AUV 561 may be performed according to the different signals emitted from the AUVs based a predetermined Time of Emission ("TOE") pattern, discussed in greater detail later. After landing at position 571, AUV 561 begins to emit an acoustic signal according to a particular protocol and/or at a particular predetermined scheduled time. At this point, additional AUVs can be guided to predetermined positions on first deployment line 501 based (in part) on the acoustic signals emitted from AUV 561 (in addition to prior landed AUVs). One of skill in the art will realize that the intended travel path of the AUV may change in the final approach based on the received acoustic signals, and a travel path of the approaching AUV may move off of the deployment line from time to time based on general movements of the AUV and readjusted trajectories. Once the AUVs have landed and/or during landing, one or more of the AUVs may readjust their seabed positions based on the received acoustic signals from adjacent AUVs along the deployment line that landed before a particular N seismic node (N- 1, N-2, etc.) as well as those that may have landed after a particular N seismic node (N+l, N+2, N+3).

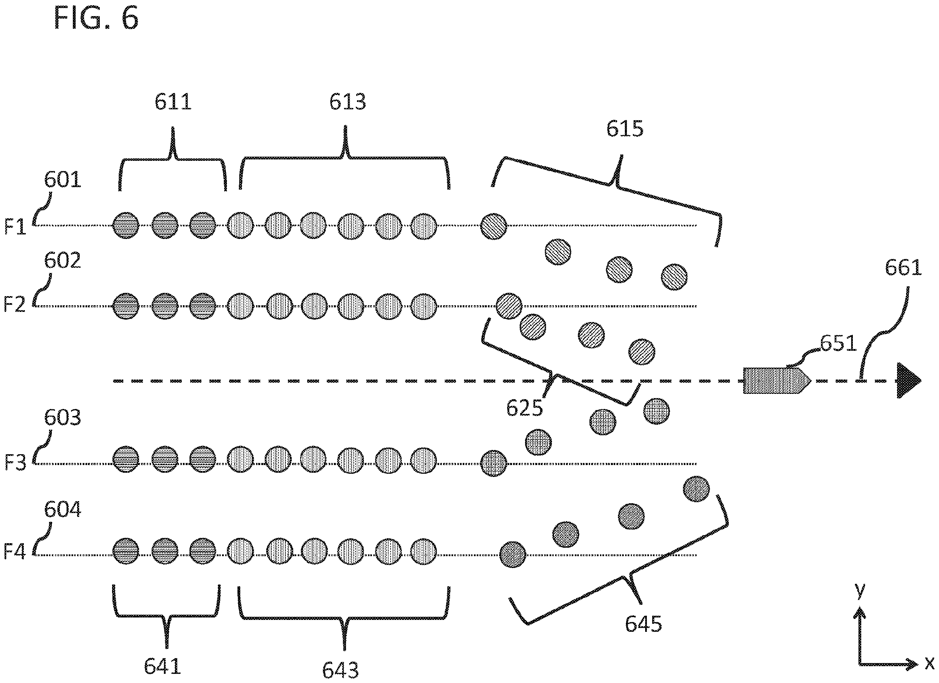

FIG. 6 illustrates a top schematic view of various operational aspects of a guidance system disclosed herein that uses a phased array system. Each of the AUVs assigned to a given deployment line may be configured to emit an acoustic signal at a particular frequency. For example, first deployment line 601 may operate at a first frequency Fl, second deployment line 602 may operate at a second frequency F2, third deployment line 603 may operate at third frequency F3, and fourth deployment line 604 may operate at a fourth frequency F4. The frequencies may vary between 18 kHz and 22 kHz, with each deployment line separated by at least an interval of 0.5 kHz. For example, AUVs assigned to first deployment line 601 may operate at a frequency Fl of 22 kHz, and the remaining deployment line frequencies may be 21 kHz for F2, 20 kHz for F3, and 19 kHz for F4. Other frequencies and combinations thereof are possible as is known in the art.

FIG. 6 illustrates a guidance system for a plurality of landed and traveling AUVs for a plurality of deployment lines. Deployment vessel 651 travels along path 661 and deploys a plurality of seismic AUVs, as described above, in two deployment lines on either side of surface vessel 651. As described previously, the first plurality of AUVs (such as AUV group 611 or AUV group 641) for each deployment line (such as two or three AUVs for each deployment line) are guided to their intended seabed destinations using USBL. Phased array may or may not be additionally used for the first group of AUVs on each deployment line. After the first group of AUVs have landed, they begin emitting acoustic signals that are used to guide all of the additional AUVs for a given deployment line. AUV group 613 illustrates a group of AUVs that have already landed at their seabed destination by being guided by the phased array system. AUV group 615 illustrates a group of AUVs that have been deployed by surface vessel 651 but are still travelling / flying towards their intended seabed destination on deployment line 601 and being guided by the phased array system based on the signals emitted from some of the AUVs within groups 611 and 613. A similar arrangement is illustrated for deployment lines 602, 603, and 604. For example, deployment line 604 has a first group of AUVs 641 that have already landed by USBL, a second group of AUVs 643 that have already landed by phased array, and a third group of AUVs 645 that are travelling to their intended destination based on phased array. As noted above, the AUVs on each deployment line are configured to emit acoustic signals at a given frequency after landing on the seabed. For example, the AUVs within AUV groups 611, 613, and 615 operate at frequency Fl and the AUVs within AUV groups 641, 643, and 645 operate at frequency F4.

Traveling AUVs 615 may be deployed from surface vessel 651 and travel in a "dog leg" approach (similar to the approach illustrated in FIGs. 5A-5E), whereby they travel across deployment line 602 and then after reaching deployment line 601 travel substantially in-line with the deployment line towards the target seabed destination. The traveling AUVs may or may not take a "dog leg" approach to the seabed destination. Further, the traveling AUVs may or may not cross over adjacent deployment lines. For example, travelling AUVs 615 have to cross over deployment line 602 prior to travelling to intended destination deployment line 601 , but travelling AUVs 625 do not have to cross over any adjacent deployment lines other than destination deployment line 602. The traveling AUVs only listen to AUVs that have previously landed on the intended destination deployment line (e.g. , only AUVs at a single frequency). Alternatively, the traveling AUVs listen to AUVs that have previously landed on a plurality of different lines (e.g. , AUVs at a plurality of frequencies). Alternatively, the AUV may be instructed to listen to AUVs emitting signals from the same or different deployment lines as the travelling AUV based on the particular alignment and/or approach being performed by the traveling AUV.

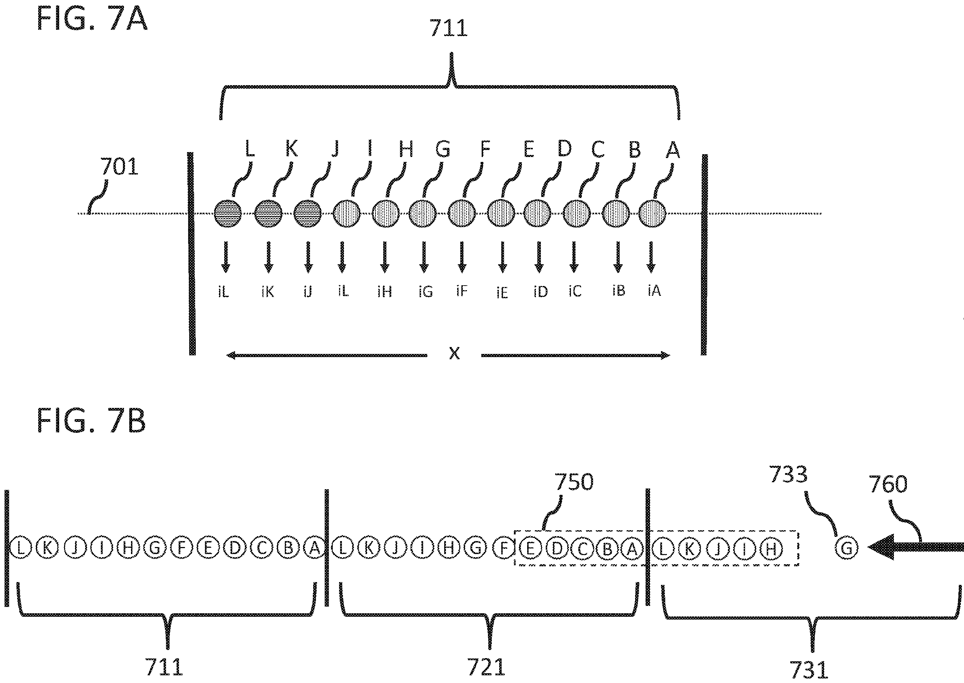

FIGs. 7A-7B illustrate a Time of Emission (TOE) system. As is known in the art, each of the seismic AUVs being deployed for the seismic survey have an accurate clock for seismic recording purposes and is synchronized to a master clock. Because each of the seismic nodes landing on a particular deployment line emit signals on the same frequency, there needs to be a way to differentiate the signals. For some or all of the AUVs, a TDMA (Time Division Multiple Access) approach may be used for any acoustic signal transmissions, in which each AUV is assigned a given frequency and a given time slot at a point to emit or transmit a signal so that the collectively transmitted signals do not interfere. Each AUV that receives such signals may be configured to assign a received signal to a specific known emitter.

A TOE pattern is utilized as a way to organize the acoustic emissions of the landed AUVs by TDMA in a series of "time slots," with each time slot devoted to the transmission of one or more AUVs. Such a TOE pattern allows the flying AUVs to exactly recognize each of the transmitting AUVs and subsequently to know the landed AUV position on the seabed. This information will be used to calculate the flying AUVs landing spot. Any of the previously disclosed guidance systems of the present disclosure may use a TOE pattern to assist in the guidance of the flying AUVs to the intended seabed destination. The disclosed TOE pattern may also utilize Space Division Multiple Access (SDMA) principles. In FIG. 7B, the overall TOE pattern utilizes the SDMA principle because the same TOE pattern is deployed across seismic nodes in different repeating groups of AUVs along the entire length of the deployment line.

For example, FIG. 7A illustrates a first group of landed AUVs 711 on deployment line 701. Each of the AUVs within AUV group 11 may form a first TOE pattern. AUV group 711 may comprise twelve AUVs labelled A-L, where each AUV is configured to emit an acoustic signal at time interval iA - iL. More or less AUVs are possible for a given TOE pattern. The width "x" of the TOE pattern corresponds to a deployment of the AUV group 711 of approximately 1200 meters (e.g. , in-line intervals of approximately 100 meters between each AUV). This distance may vary based on the number of AUVs used and the particular TOE pattern selected. The selection of distance between adjacent nodes and their TOE is performed to guarantee at least a particular desired separation time between the Time of Arrival (TOA) of all received signals by a flying AUV.

In FIG. 7A, nodes J, K, and L (each a seismic AUV) of AUV group 711are deployed using USBL, and seismic nodes A-I of AUV group 711are deployed using phased array. The disclosed TOE pattern avoids a "tetris effect," in which two different AUVs may reach the same landing point based on the received acoustic signals. For example, a certain deployment line may comprise flying seismic node N, preceding nodes N-1 , N-2, N-3, etc., and subsequent nodes N+1 , N+2, N+3, etc. If the preceding node N-1 has not landed, flying node N will still naturally take its place at the planned N position thanks to the emissions of N-2, N-3, N-4 complying to the "TOE pattern," and leave empty the seabed landing position of N-1. At some point after landing, seismic node N will start to emit. Seismic node N may start to emit immediately or seismic node N may wait to emit until preceding seismic node N-1 has landed (even if late), or start emitting after a certain time delay (considering that the preceding seismic node N-1 is lost or in failure). In such an event, a subsequently deployed seismic node may or may not be programmed to land at the seabed destination for seismic node N-1.

At a particular TOE interval, each of the AUVs emit periodically a localization pulse at a given TOE. Two adjacent landed AUVs may have their TOE separated by a different TOE interval. A TOE pattern may be generated during design of the seismic survey (such as by TOE pattern generator software) to ensure the landed AUVs emit a pulse at a TOE interval that ensures that the Time of Arrival (TOA) of two consecutive acoustic pulses on an incoming AUV are separated by at least a predetermined minimum time interval. The uncertainty of the TOA of such pulses may be approximately +/- 20 ms, and thus the TOE interval must account for such uncertainty in the specific TOE pattern. An irregular distribution of TOE intervals may be utilized, such that the TOA of adjacent seismic nodes is always different so that the individual seismic nodes can be recognized. Each of the deployment lines may utilize the same TOE pattern.

The length of the deployment line may be too large to use a single TOE pattern. Multiple TOE groups may be utilized for a particular deployment line, which each group utilizing the same TOE pattern and having the same number of AUVs. The size of the TOE pattern is designed to ensure spatial separation of AUVs having the same emitting scheme in two adjacent TOE patterns. For example, if a deployment line is approximately 10 km, a TOE pattern may be generated that is approximately 1km in length, and thus approximately ten TOE groups may be utilized for the particular deployment line, each with the same number of AUVs. Each of the TOE patterns may be the same and/or identical for the entire deployment line.

FIG. 7B illustrates a spatial view of one seismic AUV node deployment with repeating TOE patterns. Each group corresponding to the same TOE pattern comprises nodes labelled A-L (each a seismic AUV) and comprises a length of approximately 1200 meters (as similarly illustrated in FIG. 7A). The same TOE pattern may be utilized for each AUV group 711, 721, and 731. In other words, the same TOE pattern repeats itself after a predetermined distance (e.g., between different AUV groups) to ensure that the landed AUVs emitting at the same time cannot be received by any flying AUV approaching its landing position. In practice, and depending on the length of the deployment line, more AUV groups may be utilized and employ the same TOE pattern.

As illustrated in FIG. 7B (which shows a spatial view of the disclosed TOE pattern), seismic nodes A-L of AUV group 711 have landed, seismic nodes A-L of AUV group 721 have landed, and seismic nodes H-L of AUV group 731 have landed, while flying node G (marked as AUV 733) is travelling along the deployment line towards its seabed target in a general direction of path 760. Based on the distance between each seismic node, flying node 733 can only receive acoustic signals emitted from those AUVs in group 750 (marked by the dashed box in FIG. 7B). AUV group 750 may comprise fewer AUVs than those deployed in the utilized TOE pattern. AUV group 750 may comprise previously landed nodes H-L of AUV group 731 and previously landed nodes A-E of AUV group 71. As mentioned above, the AUVs within group 750 each emit acoustic signals at different TOE intervals. After flying node 733 (G) lands, it begins to emit acoustic signals at the predetermined TOE interval. This pattern is repeated until the desired number of AUVs are deployed on the deployment line. In practice, multiple deployment lines are deployed at the same time (such as between two to eight deployment lines) using the same protocol illustrated in FIGs. 7Aand7B. As described in FIGs. 4A-4D, the deploying vessel may take one or more serpentine paths through the seismic area to deploy additional sets of deployment lines to achieve a larger width of the seismic survey.

The first plurality of AUVs may be deployed to the seabed without using USBL. In examples not forming part of thr present invention, a ROV may be used to specifically place one or more seismic nodes at their predetermined positions. Those seismic nodes, at some point after being planted on the seabed, may then begin to emit acoustic signals that can be received by traveling AUVs and be guided to their seabed destinations using phased array as described herein. In other words, whether the initial marker / boundary AUVs are guided by USBL (or another guidance system) or planted by an ROV, subsequently deployed AUVs may determine their position by the disclosed phased array approach by receiving acoustic signals from landed AUVs. Still further, the marker / boundary AUVs may not be AUVs or seismic nodes at all and may simply be acoustic tags or other devices that emit acoustic signals according to a disclosed TOE pattern and are planted on the seabed at known/predetermined positions (such as by a ROV).

Many variations in the configurations of the AUV, guidance system, and/or deployment system are within the scope of the invention as defined in the appended claims. For example, the AUVs in the described embodiments are shown being deployed from a surface vessel. However, the same guidance method and system described herein can be utilized for deploying AUVs from a subsea structure, such as a ROV or basket lowered from a surface vessel. Similarly, the AUVs can be recovered in a wide variety of operations known to one of skill in the art, such as being recovered at a subsea location (such as a basket, which can be lowered from and raised to a surface vessel) or travelling back to a surface vessel (such as the deployment vessel) and being recovered by a funnel, basket, or other surface recovery mechanism. As another example, other subsea vehicles can be deployed besides just autonomous seismic nodes, such as drones or vehicles with non-seismic sensors, and a similar guidance system can be used for land seismic and non-seismic sensors, drones, and/or vehicles. The deployment lines may be generally perpendicular and/or parallel to the general travel path direction of the deployment vessel. For phased array techniques, acoustic signals from landed AUVs can be timed according to any number of selected patterns, and a Time of Emission pattern may take many different forms for the AUVs within and between the deployment lines. In some embodiments, USBL is not used at all. It is emphasized that the foregoing embodiments are only examples of the very many different structural and material configurations that are possible within the scope of the present invention, as defined by the appended claims.

Although the invention(s) is/are described herein with reference to specific embodiments, various modifications and changes can be made without departing from the scope of the present invention(s), as presently set forth in the claims below. Accordingly, the specification and figures are to be regarded in an illustrative rather than a restrictive sense.

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

## Claims

1. A method for performing a marine seismic survey in a body of water, comprising
providing a plurality of seismic autonomous underwater vehicles, AUVs, each of the plurality of AUVs including an acoustic emitter and an acoustic receiver;
deploying a first group of the plurality of seismic AUVs (201; 311, 312; 411; 511; 611) into the body of water and guiding the first group of seismic AUVs to a first plurality of seabed positions in at least one deployment line by using a first guidance system;
deploying a second group of the plurality of seismic AUVs (203; 312, 313; 413; 513; 613) into the body of water, wherein the acoustic receiver of each of the second group (203; 312, 313; 413; 513) of AUVs is configured to receive acoustic signals emitted by the previously landed seismic AUVs; and
guiding each of the second group (203; 312, 313; 413; 513; 613) of seismic AUVs to a second plurality of seabed positions in said at least one deployment line by using their respective acoustic receiver, based on acoustic signals emitted by the acoustic emitters of the first group of seismic AUVs after landing on the seabed;
the method being **characterised in that** each acoustic receiver comprises a phased array receiver.

2. The method of claim 1, further comprising guiding at least some of the second group of the plurality (203; 3132, 313; 413; 513) of seismic AUVs based on acoustic signals emitted by previously landed AUVs within the second plurality of AUVs.

3. The method of claim 1, wherein the first and second groups of the plurality of seismic AUVs are guided to seabed positions in a first plurality of deployment lines (401-404; 501, 502) on both sides of a deployment surface vessel (451; 551) from which the first and second plurality of seismic AUVs are deployed, wherein each of the first plurality of deployment lines is substantially parallel to the direction of travel of the deployment surface vessel (451; 551).

4. The method of claim 3, wherein acoustic signals emitted by a given landed seismic AUV are emitted at a given frequency depending on the deployment line among the first plurality of deployment line in which said given landed seismic AUV has landed.

5. The method of claims 3 or 4, further comprising
deploying said first plurality (401-404; 501, 502) of deployment lines on both sides of said deployment surface vessel as the vessel travels in a first direction; and
deploying a second plurality (405-408) deployment lines on both sides of the deployment surface vessel (451) as the vessel travels in a second direction, wherein each of the second deployment lines is substantially parallel to the second direction of travel of the vessel,
wherein the second direction is substantially parallel and opposite to the first direction,
wherein each of the first and second plurality of deployment lines comprises a plurality of landed seismic AUVs guided to the seabed using phased array.

6. The method of anyone of claims 1 to 5, wherein the first guidance system is a USBL system.

7. The method of claim 1, further comprising
landing the second group of the plurality of seismic AUVs on the seabed based on signals emitted by the first group of the plurality of seismic AUVs and without guidance by a surface vessel.

8. The method of claim 1, further comprising
emitting acoustic pulses from a plurality of landed seismic AUVs after landing on the seabed;
receiving the emitted pulses by a plurality of flying seismic AUVs; and
determining positions of each of the plurality of flying seismic AUVs by the received emitted pulses.

9. The method of claim 8, further comprising
landing each of the plurality of flying seismic AUVs on predetermined seabed positions based on the received emitted pulses.

10. The method of claim 1, further comprising guiding a flying AUV (561) across one or more deployment lines (502) and upon crossing an intended destination deployment line (501), guiding the flying AUV (561) substantially in-line with the intended destination deployment line (501) until reaching a target seabed position (571) on the intended destination deployment line (501).

11. A system (200; 300; 400; 500) configured to perform a marine seismic survey on the seabed, comprising:
a surface vessel (210, 220; 303, 305; 451; 551; 651), having a USBL transceiver (211, 221) mounted thereon;
a plurality of seismic autonomous underwater vehicles, AUVs;
wherein each of the plurality of seismic AUVs (100) comprises:
a first guidance system comprising a USBL transponder (130) mounted on each of the seismic AUVs (100); and
a second guidance system comprising an acoustic emitter and an acoustic receiver on each of the seismic AUVs (100), wherein each acoustic receiver is configured to receive pulses emitted by the acoustic emitters of other seismic AUVs of the plurality of seismic AUVs; and
each of the plurality of seismic AUVs (100) is configured to be guided to an ocean bottom position using a first guidance protocol that uses the first guidance system or a second guidance protocol that uses the second guidance system, wherein:
the first guidance protocol is configured to use acoustic communication between the USBL transponder (130) mounted on each of the seismic AUVs (100) and the corresponding USBL transceiver (211, 221) mounted on the vessel (210, 220; 303, 305; 451; 551; 651); and
the second guidance protocol comprises receiving, with the acoustic receiver, a pulse emitted by the acoustic emitter of at least one of the plurality of seismic AUVs that have been deployed to the ocean bottom,
wherein the acoustic receiver of each seismic AUV (100) is a phased array receiver.

12. The system of claim 11, wherein a time interval of the emitted pulses is determined by a Time of Emission, TOE, pattern, wherein each deployed seismic AUV (A-L) is configured to emit an acoustic pulse at a different time slot.

13. The system of claim 12, wherein the TOE pattern is configured to repeat itself a plurality of times across a plurality of different AUV groups (711) within at least a first deployment line.

14. The system of claim 12, wherein the TOE pattern is configured to create at least a predetermined minimum separation between the emitted pulses received by an approaching seismic AUV (733).

15. The system of claim 12, wherein the time interval is irregularly distributed.

16. The system of claim 12, wherein the time interval is configured to allow a flying AUV to determine the identity of an AUV that transmits acoustic signals according to the TOE pattern.

## Patentansprüche

1. Verfahren zum Durchführen einer marinen seismischen Untersuchung in einem Gewässer, umfassend Bereitstellen einer Vielzahl von seismischen autonomen Unterwasserfahrzeugen, AUVs, wobei jedes aus der Vielzahl von AUVs einen akustischen Emitter und einen akustischen Empfänger beinhaltet;
Einsetzen einer ersten Gruppe aus der Vielzahl von seismischen AUVs (201; 311, 312; 411; 511; 611) in dem Gewässer und Führen der ersten Gruppe von seismischen AUVs zu einer ersten Vielzahl von Meeresbodenpositionen in zumindest einer Einsatzlinie durch Verwenden eines ersten Führungssystems;
Einsetzen einer zweiten Gruppe aus der Vielzahl von seismischen AUVs (203; 312, 313; 413; 513; 613) in dem Gewässer, wobei der akustische Empfänger von jedem aus der zweiten Gruppe (203; 312, 313; 413; 513) von AUVs konfiguriert ist, um akustische Signale zu empfangen, die durch die zuvor gelandeten seismischen AUVs emittiert werden; und
Führen von jedem aus der zweiten Gruppe (203; 312, 313; 413; 513; 613) von seismischen AUVs zu einer zweiten Vielzahl von Meeresbodenpositionen in der zumindest einen Einsatzlinie durch Verwenden ihres jeweiligen akustischen Empfängers, basierend auf akustischen Signalen, die durch die akustischen Emitter von der ersten Gruppe von seismischen AUVs nach dem Landen auf dem Meeresboden emittiert werden;
wobei das Verfahren **dadurch gekennzeichnet ist, dass** jeder akustische Empfänger einen Phased-Array-Empfänger umfasst.

2. Verfahren nach Anspruch 1, ferner umfassend Führen von zumindest einigen aus der zweiten Gruppe aus der Vielzahl (203; 3132, 313; 413; 513) von seismischen AUVs basierend auf akustischen Signalen, die durch zuvor gelandete AUVs innerhalb der zweiten Vielzahl von AUVs emittiert werden.

3. Verfahren nach Anspruch 1, wobei die erste und die zweite Gruppe aus der Vielzahl von seismischen AUVs zu Meeresbodenpositionen in einer ersten Vielzahl von Einsatzlinien (401-404; 501, 502) auf beiden Seiten eines Einsatzoberflächenschiffs (451; 551), von dem aus die erste und die zweite Vielzahl von seismischen AUVs eingesetzt werden, geführt werden, wobei jede aus der ersten Vielzahl von Einsatzlinien im Wesentlichen parallel zu der Bewegungsrichtung des Einsatzoberflächenschiffs (451; 551) ist.

4. Verfahren nach Anspruch 3, wobei akustische Signale, die durch ein gegebenes gelandetes seismisches AUV emittiert werden, bei einer gegebenen Frequenz abhängig von der Einsatzlinie aus der ersten Vielzahl von Einsatzlinien, in der das gegebene gelandete seismische AUV gelandet ist, emittiert werden.

5. Verfahren nach Anspruch 3 oder 4, ferner umfassend
Einsetzen der ersten Vielzahl (401-404; 501, 502) von Einsatzlinien auf beiden Seiten des Einsatzoberflächenschiffs, während sich das Schiff in einer ersten Richtung bewegt; und
Einsetzen einer zweiten Vielzahl (405-408) von Einsatzlinien auf beiden Seiten des Einsatzoberflächenschiffs (451), während sich das Schiff in einer zweiten Richtung bewegt, wobei jede der zweiten Einsatzlinien im Wesentlichen parallel zu der zweiten Bewegungsrichtung des Schiffs ist,
wobei die zweite Richtung im Wesentlichen parallel und entgegengesetzt zu der ersten Richtung ist,
wobei jede aus der ersten und der zweiten Vielzahl von Einsatzlinien eine Vielzahl von gelandeten seismischen AUVs umfasst, die unter Verwendung von Phased-Array zu dem Meeresboden geführt werden.

6. Verfahren nach einem der Ansprüche 1 bis 5, wobei das erste Führungssystem ein USBL-System ist.

7. Verfahren nach Anspruch 1, ferner umfassend
Landen der zweiten Gruppe aus der Vielzahl von seismischen AUVs auf dem Meeresboden basierend auf Signalen, die durch die erste Gruppe aus der Vielzahl von seismischen AUVs emittiert werden, und ohne Führung durch ein Oberflächenschiff.

8. Verfahren nach Anspruch 1, ferner umfassend
Emittieren von akustischen Impulsen von einer Vielzahl von gelandeten seismischen AUVs nach dem Landen auf dem Meeresboden;
Empfangen der emittierten Impulse durch eine Vielzahl von fliegenden seismischen AUVs; und
Bestimmen von Positionen von jedem aus der Vielzahl von fliegenden seismischen AUVs durch die empfangenen emittierten Impulse.

9. Verfahren nach Anspruch 8, ferner umfassend
Landen von jedem aus der Vielzahl von fliegenden seismischen AUVs auf vorbestimmten Meeresbodenpositionen basierend auf den empfangenen emittierten Impulsen.

10. Verfahren nach Anspruch 1, ferner umfassend Führen eines fliegenden AUV (561) über eine oder mehrere Einsatzlinien (502) und beim Überqueren einer beabsichtigten Zieleinsatzlinie (501) Führen des fliegenden AUV (561) im Wesentlichen in Linie mit der beabsichtigten Zieleinsatzlinie (501), bis eine Zielmeeresbodenposition (571) auf der beabsichtigten Zieleinsatzlinie (501) erreicht ist.

11. System (200; 300; 400; 500), das konfiguriert ist, um eine marine seismische Untersuchung auf dem Meeresboden durchzuführen, umfassend:
ein Oberflächenschiff (210, 220; 303, 305; 451; 551; 651), an dem ein USBL-Sendeempfänger (211, 221) montiert ist;
eine Vielzahl von seismischen autonomen Unterwasserfahrzeugen, AUVs;
wobei jedes aus der Vielzahl von seismischen AUVs (100) Folgendes umfasst:
ein erstes Führungssystem, das einen USBL-Transponder (130) umfasst, der an jedem der seismischen AUVs (100) montiert ist; und
ein zweites Führungssystem, das einen akustischen Emitter und einen akustischen Empfänger auf jedem der seismischen AUVs (100) umfasst, wobei jeder akustische Empfänger konfiguriert ist, um Impulse zu empfangen, die durch die akustischen Emitter von anderen seismischen AUVs aus der Vielzahl von seismischen AUVs emittiert werden; und
jedes aus der Vielzahl von seismischen AUVs (100) konfiguriert ist, um zu einer Ozeanbodenposition unter Verwendung eines ersten Führungsprotokolls, welches das erste Führungssystem verwendet, oder eines zweiten Führungsprotokolls, welches das zweite Führungssystem verwendet, geführt zu werden, wobei:
das erste Führungsprotokoll konfiguriert ist, um akustische Kommunikation zwischen dem USBL-Transponder (130), der an jedem der seismischen AUVs (100) montiert ist, und dem entsprechenden USBL-Sendeempfänger (211, 221), der an dem Schiff (210, 220; 303, 305; 451; 551; 651) montiert ist, zu verwenden; und
das zweite Führungsprotokoll Empfangen, mit dem akustischen Empfänger, eines Impulses umfasst, der durch den akustischen Emitter von zumindest einem aus der Vielzahl von seismischen AUVs, die auf dem Ozeanboden eingesetzt worden ist, emittiert wird,
wobei der akustische Empfänger von jedem seismischen AUV (100) ein Phased-Array-Empfänger ist.

12. System nach Anspruch 11, wobei ein Zeitintervall der emittierten Impulse durch ein Emissionszeitpunkt-, TOE-Muster bestimmt wird, wobei jedes eingesetzte seismische AUV (A-L) konfiguriert ist, um einen akustischen Impuls in einem anderen Zeitfenster zu emittieren.

13. System nach Anspruch 12, wobei das TOE-Muster konfiguriert ist, um sich eine Vielzahl von Malen über eine Vielzahl von unterschiedlichen AUV-Gruppen (711) innerhalb von zumindest einer ersten Einsatzlinie zu wiederholen.

14. System nach Anspruch 12, wobei das TOE-Muster konfiguriert ist, um zumindest einen vorbestimmten Mindestabstand zwischen den emittierten Impulsen, die durch ein sich näherndes seismisches AUV (733) empfangen werden, zu schaffen.

15. System nach Anspruch 12, wobei das Zeitintervall unregelmäßig verteilt ist.

16. System nach Anspruch 12, wobei das Zeitintervall konfiguriert ist, um zu ermöglichen, dass ein fliegendes AUV die Identität eines AUV bestimmt, das akustische Signale gemäß dem TOE-Muster überträgt.

## Revendications

1. Procédé permettant de réaliser une étude sismique marine dans une masse d'eau, comprenant la fourniture d'une pluralité de véhicules sous-marins autonomes sismiques, AUVs, chacun de la pluralité d'AUVs comprenant un émetteur acoustique et un récepteur acoustique ;
le déploiement d'un premier groupe de la pluralité d'AUVs sismiques (201 ; 311, 312 ; 411 ; 511 ; 611) dans la masse d'eau et le guidage du premier groupe d'AUV sismiques vers une première pluralité de positions de fond marin dans au moins une ligne de déploiement à l'aide d'un premier système de guidage ;
le déploiement d'un second groupe de la pluralité d'AUV sismiques (203 ; 312, 313 ; 413 ; 513 ; 613) dans la masse d'eau, ledit récepteur acoustique de chacun du second groupe (203 ; 312, 313 ; 413 ; 513) des AUV étant configuré pour recevoir des signaux acoustiques émis par les AUV sismiques précédemment mis en place ; et
le guidage de chacun du second groupe (203 ; 312, 313 ; 413 ; 513 ; 613) d'AUV sismiques vers une seconde pluralité de positions de fond marin dans ladite au moins une ligne de déploiement à l'aide de leur récepteur acoustique respectif, sur la base de signaux acoustiques émis par les émetteurs acoustiques du premier groupe d'AUV sismiques après mise en place sur le fond marin ;
le procédé étant **caractérisé en ce que** chaque récepteur acoustique comprend un récepteur de réseau à commande de phase.

2. Procédé de la revendication 1, comprenant en outre le guidage d'au moins une partie du second groupe de la pluralité (203 ; 3132, 313 ; 413 ; 513) d'AUV sismiques sur la base de signaux acoustiques émis par des AUV précédemment mis en place au sein de la seconde pluralité d'AUV.

3. Procédé de la revendication 1, lesdits premier et second groupes de la pluralité d'AUV sismiques étant guidés vers des positions de fond marin dans une première pluralité de lignes de déploiement (401-404 ; 501, 502) des deux côtés d'un navire de surface de déploiement (451 ; 551) à partir duquel les première et seconde pluralité d'AUV sismiques sont déployées, chacune de la première pluralité de lignes de déploiement étant sensiblement parallèle à la direction de déplacement du navire de surface de déploiement (451 ; 551).

4. Procédé de la revendication 3, des signaux acoustiques émis par un AUV sismique mis en place donné étant émis à une fréquence donnée en fonction de la ligne de déploiement parmi la première pluralité de lignes de déploiement dans laquelle ledit AUV sismique mis en place donné a été mis en place.

5. Procédé des revendications 3 ou 4, comprenant en outre
le déploiement de ladite première pluralité (401-404 ; 501, 502) de lignes de déploiement des deux côtés dudit navire de surface de déploiement tandis que le navire se déplace dans une première direction ; et
le déploiement d'une seconde pluralité (405-408) de lignes de déploiement des deux côtés du navire de surface de déploiement (451) tandis que le navire se déplace dans une seconde direction, chacune des secondes lignes de déploiement étant sensiblement parallèle à la seconde direction de déplacement du navire,
ladite seconde direction étant sensiblement parallèle et opposée à la première direction,
chacune des première et seconde pluralités de lignes de déploiement comprenant une pluralité d'AUV sismiques mis en place guidés vers le fond marin à l'aide d'un réseau à commande de phase.

6. Procédé de l'une quelconque des revendications 1 à 5, ledit premier système de guidage étant un système USBL.

7. Procédé de la revendication 1, comprenant en outre
la mise en place du second groupe de la pluralité d'AUV sismiques sur le fond marin sur la base de signaux émis par le premier groupe de la pluralité d'AUV sismiques et sans guidage par un navire de surface.

8. Procédé de la revendication 1, comprenant en outre
l'émission d'impulsions acoustiques à partir d'une pluralité d'AUV sismiques mis en place après la mise en place sur le fond marin ;
la réception des impulsions émises par une pluralité d'AUV sismiques volants ; et
la détermination des positions de chacun de la pluralité d'AUV sismiques volants par les impulsions émises reçues.

9. Procédé de la revendication 8, comprenant en outre
la mise en place de chacun de la pluralité d'AUV sismiques volants sur des positions de fond marin prédéfinies sur la base des impulsions émises reçues.

10. Procédé de la revendication 1, comprenant en outre le guidage d'un AUV volant (561) à travers une ou plusieurs lignes de déploiement (502) et lors du franchissement d'une ligne de déploiement de destination prévue (501), le guidage de l'AUV volant (561) sensiblement en ligne avec la ligne de déploiement de destination prévue (501) jusqu'à atteindre une position de fond marin cible (571) sur la ligne de déploiement de destination prévue (501).

11. Système (200 ; 300 ; 400 ; 500) configuré pour réaliser une étude sismique marine sur le fond marin, comprenant :
un navire de surface (210, 220 ; 303, 305 ; 451 ; 551 ; 651), sur lequel est monté un émetteur-récepteur USBL (211, 221) ;
une pluralité de véhicules sous-marins autonomes sismiques, AUV ;
chacun de la pluralité d'AUV sismiques (100) comprenant :
un premier système de guidage comprenant un transpondeur USBL (130) monté sur chacun des AUV sismiques (100) ; et
un second système de guidage comprenant un émetteur acoustique et un récepteur acoustique sur chacun des AUV sismiques (100), chaque récepteur acoustique étant configuré pour recevoir des impulsions émises par les émetteurs acoustiques d'autres AUV sismiques de la pluralité d'AUV sismiques ; et
chacun de la pluralité d'AUV sismiques (100) étant configuré pour être guidé vers une position de fond de l'océan à l'aide d'un premier protocole de guidage qui utilise le premier système de guidage ou d'un second protocole de guidage qui utilise le second système de guidage,
ledit : premier protocole de guidage étant configuré pour utiliser une communication acoustique entre le transpondeur USBL (130) monté sur chacun des AUV sismiques (100) et l'émetteur-récepteur USBL correspondant (211, 221) monté sur le navire (210, 220 ; 303, 305 ; 451 ; 551 ; 651) ; et
le second protocole de guidage comprenant la réception, avec le récepteur acoustique, d'une impulsion émise par l'émetteur acoustique d'au moins l'un de la pluralité d'AUV sismiques qui ont été déployés au fond de l'océan,
ledit récepteur acoustique de chaque AUV sismique (100) étant un récepteur de réseau à commande de phase.

12. Système de la revendication 11, un intervalle de temps des impulsions émises étant déterminé par un modèle de temps d'émission, TOE, chaque AUV sismique déployé (A-L) étant configuré pour émettre une impulsion acoustique à un intervalle de temps différent.

13. Système de la revendication 12, ledit modèle TOE étant configuré pour se répéter une pluralité de fois sur une pluralité de groupes AUV différents (711) au sein d'au moins une première ligne de déploiement.

14. Système de la revendication 12, ledit modèle TOE étant configuré pour créer au moins une séparation minimale prédéfinie entre les impulsions émises reçues par un AUV sismique en approche (733).

15. Système de la revendication 12, ledit intervalle de temps étant distribué de manière irrégulière.

16. Système de la revendication 12, ledit intervalle de temps étant configuré pour permettre à un AUV volant de déterminer l'identité d'un AUV qui transmet des signaux acoustiques selon le modèle TOE.
